# EUROPEAN PATENT SPECIFICATION

(11) **EP 1 185 119 B1**
(45) Date of publication and mention of the grant of the patent: **28.11.2007**
(21) Application number: 01307397.8
(22) Date of filing: 31.08.2001
(51) Int. Cl.: H04Q 7/22

(54) **Telecommunications services apparatus**
Telekommunikationsdienstgerät
Appareil de services télécommuniqués

(30) Priority: 01.09.2000 GB 0021496
(43) Date of publication of application: 06.03.2002
(73) Proprietor: INTELLPROP LIMITED, Guernsey, Channel Islands (GB)
(72) Inventor: Wilson, Jeffrey, Fareham, Hampshire PO16 7OH (GB)
(74) Representative: Robinson, Nigel Alexander Julian

(56) References cited:
- EP-A- 0 851 696
- WO-A-97/41654
- GB-A- 2 293 667
- US-A- 5 630 117
- KYLANPAA M ET AL: "Nomadic access to information services by a GSM phone" COMPUTERS AND GRAPHICS, PERGAMON PRESS LTD. OXFORD, GB, vol. 20, no. 5, 1 September 1996 (1996-09-01), pages 651-658, XP004015416 ISSN: 0097-8493

## Description

The present invention relates to mobile radio telecommunications services apparatus and methods of providing information to mobile telecommunications apparatus.

### Background of Invention

Since the invention of printing, books have been the main source of factual material. Encyclopedias and text books are obvious examples which provide this information. In recent years some of this information has been transferred to electronic media, (for example, CDs) which might be available on personal computers.

The World Wide Web has been another source of information. Within a few years, this information is likely to be enhanced with the availability of WAP. However, all Web, and in the future all WAP material is largely unstructured material so that although the information might be available somewhere on the World Wide Web, it is difficult to find a specific item of information that may be required. Although search engines are provided to help this process, in reality they are not capable of providing the information without spending a significant amount of time. Any method which can save time will provide a benefit.

In the UK alone in early 2000 there were over 27,000,000 mobile users. The majority of these users have first generation handsets with SMS capability but no advanced features such as GPRS or WAP. Therefore to achieve significant market penetration any advanced features must be compatible with generic handsets. Although not all users subscribe to a service which permits them to send SMS messages all handsets have the capability to receive them. Also due to the revenue implications the majority of new phones purchased provide SMS sending capability. Users only pay for the messages that they send. All users can usually receive messages whether or not they subscribe to an SMS sending service.

Accordingly, it is desirable to provide a facility through which information, which has been conventionally only available in books, or accessible from personal computers, is available to mobile users.

European Patent Application Serial No. EP-A-0 851 696 discloses a system in which a mobile station subscriber can access data from an informational database and have it delivered to a desired destination. A database associated with the informational database maintains subscriber profiles. When the informational database receives a data request, it makes use of a mobile station identifier to acquire subscriber profile information. Using that profile information, the requested data is forwarded to the required destination in text message form.

### Summary of the Invention

According to one aspect of the present invention there is provided a telecommunications services apparatus for use with a mobile radio telecommunications system, said services apparatus comprising a communications processor operable to receive data from mobile stations and to send data to said mobile stations via said mobile radio system, a data store arranged to store information, and an information processor coupled to said communications processor and said data store, said information processor being operable in response to information query data received from a one of said mobile stations to retrieve information from said data store in accordance with said received query data, for communication to said mobile station, characterised in that said data store is arranged to store said information in accordance with a hierarchical structure, and in that said information processor has a query store associated with an identification for said mobile station, said information processor being arranged to store in said query store an indication of a relative position in said hierarchical structure appertaining to the information retrieved in response to a previous information query from said mobile station.

According to another aspect of the present invention there is provided a method of providing information to mobile telecommunications stations communicating via a mobile radio telecommunications system, said method comprising
arranging a data store to store information,
responding to information query data received from a one of said mobile stations, by retrieving information from said data store in accordance with said received query data, and
formatting said retrieved information for communication to said mobile station,
characterised by:
said data store storing said information in accordance with a hierarchical structure, and maintaining in a query store associated with an identification for said mobile station, an indication of a relative position in said hierarchical structure appertaining to the information retrieved in response to a previous information query from said mobile station.

The present invention provides a facility for accessing information from a mobile station remotely. This facility is available without the need for the mobile station to be pre-registered with the invention. Furthermore, in response to information queries from a mobile station, the current query is stored in a query store which is uniquely associated with the mobile station. As a result, a menu of options may be provided from the information processor which is indicative of possible branches in a hierarchical structure into which the information is arranged. The mobile user can be therefore provided with options which can be selected in accordance with a desired enquiry, which are stored in the query store, so that a query history is established, in accordance with responses from the mobile user to the information retrieved from the data store. This is particularly advantageous for several reasons:
- it is possible to enter simple commands requiring few key strokes. This makes it both simpler and faster to use;
- at any time during queries the mobile station data communications facilities may be used for other purposes;
- at any time a query may be sent that has a reply that does not affect the current point in the information hierarchy;
- any amount of time can elapse before the mobile station sends another query that will continue from the point in the information hierarchy last stored;
- at any time during communication with a mobile station the communications link may be broken, for example as a result of a failed hand-over, as such the mobile station may re-establish a call and continue from the point in the information hierarchy corresponding to the last query.

In preferred embodiments the information processor is operable to receive the query data via the Short Message Service (SMS), and to format said information retrieved from said data store to the effect that said information can be communicated via the Short Message Service, said mobile radio telecommunications system being arranged to operate in accordance with the Global System for Mobiles.

Embodiments of the present invention can provide users with an SMS interface and text processing rules on the SMS messages to provide an interactive service which can provide focused factual information. To achieve this functionality it is necessary for the system to have memory so that it can be aware of a previously stored reference that the user accessed and hence the menu choices which are available to the user. The system may provide factual information that people will require and will also provide memory so that users can navigate through the information.

The data store may also be coupled to an Internet Server, the information processor being operable to provide access to the data store via the World Wide Web. By providing access to information stored on a web site, a mobile user can access a potentially substantial quantity of data, via the World Wide Web. In order to facilitate access to the information from a mobile station, the information stored in the web site may be adapted to provide the information in a form which facilitates communication via the Short Message Service, thereby providing the information stored in or forming part of the web site in an appropriate format.

In order to provide the unique association of the query store with the identification of a mobile user, the identification associating each of said mobile stations with a corresponding query store may be the subscriber identity of the mobile user.

Advantageously, the information processor may be operable to log query data received from the mobile stations. Furthermore, in preferred embodiments, the information processor may be operable to generate a report indicating query data for which no information was available from the data store. Another improvement provided by the present invention is that the information processor obtains all the SMS questions which have been asked, hence if there are some answers which are clearly missing then this gap may be quickly filled. Book publishers have never been able to obtain this level of feedback, and this feature provides an interactive arrangement for maintaining the data store. If one topic receives a high number of requests, it is possible to refine and improve this specific area to meet customer demand. Over time, the quality of information from the data store can be improved.

### Brief Description of the Drawings

An embodiment of the present invention will now be described, by way of example only, wherein:

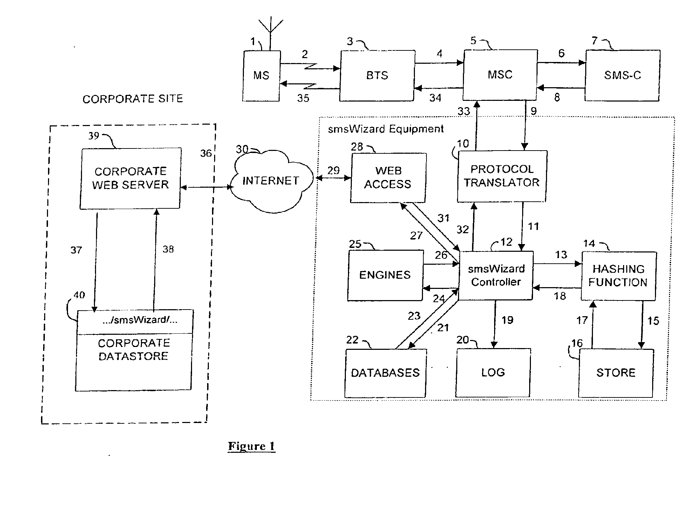

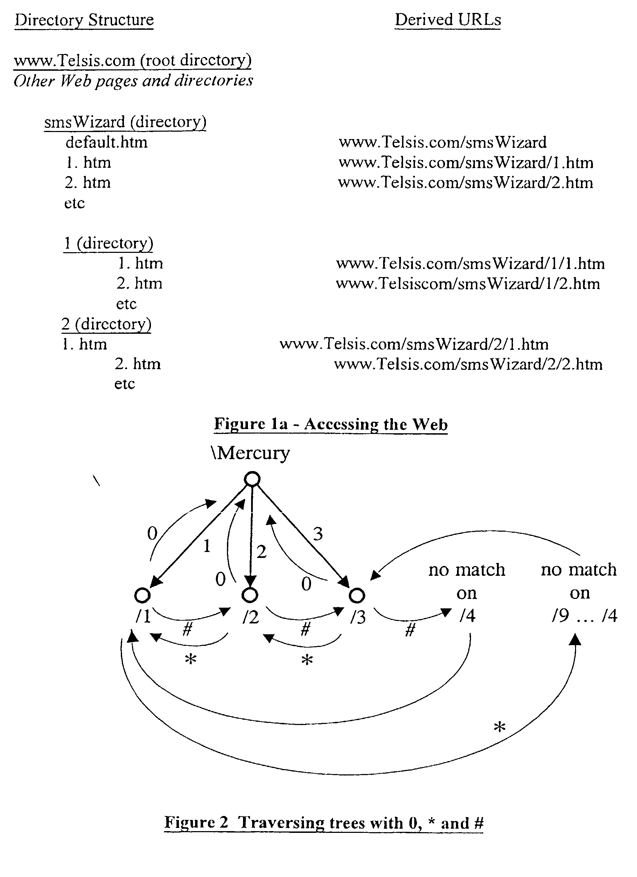

Figure 1 is a system block diagram of a telecommunications services apparatus according to an embodiment of the present invention;
Figure 1 a shows a method of accessing the world wide web in the apparatus of Figure 1;
Figure 2 shows a technique for traversing trees, using 0, * and #;
Figure 2a is a summary of single digit commands;
Figure 3 shows an example of the configuration of an information data store; and
Figure 4 (comprising Figures 4.1 - 4.42) is a system flow diagram of operation of the apparatus of Figure 1.

### Description of Preferred Embodiment

Embodiments of the invention provide for SMS access to a mass of factual information, without any need to pre-register the mobile station with the service provider. This information is available at all times of the day and wherever one is located. The system defines a syntax for locating information from an encyclopedia, a dictionary, text books on numerous topics, a numerical and symbolic algebraic calculator, phrase books for English to/from foreign languages, lists of phone numbers for common tasks and Web access. The technique also defines a number of interaction commands which allows the mobile phone user to get ever more specific information.

A further feature of an embodiment of the invention is that all unsuccessful inputs may be examined in order to provide greater scope. It is envisaged the examination of unsuccessful inputs will in general cause information to be added such that a similar future input would be successful. When information is added for this reason there is potential for the information, or notification of the information, to be sent to the mobile phone user for whom the original input was unsuccessful. It is this feature which perhaps could make the system embodying the invention the first truly interactive fact book.

The general benefits of mobile phones are:
- carried everywhere by their users;
- allow alphanumeric input;
- have a screen large enough to display information in natural languages;
- have built in illumination so that they can be used in the dark;
- have network coverage almost everywhere;
- and with SMS provide cheap and reliable data communication facilities.

This system uses these characteristics to provide numerous other functions, so that the user only needs to carry one thing - their mobile phone!

Users benefit from a combination of the above facilities:
- travel lighter - just the phone, leave the calculator, dictionaries, encyclopedias, etc behind;
- carry less items;
- be better informed;
- have accurate facts to hand;
- work or play wherever you are.

### Calculator

In addition to the general advantages of mobile phones, a calculator function has the following additional advantages:
- users are able to see (and edit) the whole equation;
- advanced features such as variables are permitted;
- since the calculation is performed on a remote server, much higher precision may be provided
- the answer may be stored for later viewing;
- on-line help can be available.

The calculator function will do arithmetic, calculate the result of mathematical functions, provide mathematical identities such as Sine (A + B), calculate results of integrals and derivatives and will do symbolic simplification of mathematical expressions. In the preferred embodiment the property which allows the calculator function to be recognised is that the last symbol is an equals (=) sign. One important characteristic of this calculator is that the intelligence does not reside in the mobile phone but exists in the remote server. This means that over time the power and functionality of the calculator can be increased.

### Dictionary

An on-line directory, as provided by the preferred embodiment of this invention, offers the following additional advantages:
- it is substantially lighter than most dictionaries;
- it can be kept up-to-date so the user never needs to buy a new one;
- it may be extended over time, based on user requirements;
- there is no need to thumb pages, so it doesn't wear out;
- the input may include wildcards, so the user can input an incomplete spelling or just a word ending, this will be invaluable to crossword and word puzzle enthusiasts.

The dictionary function gives the definition of the English version of this word. This required functionality is identified by a full stop (.) being the first character of the SMS message. Once again this dictionary does not have intelligence in the mobile phone but in the remote server. This means that over time the functionality and power of the English dictionary may be enhanced and extended.

### Anagrams

The invention may also allow access to an anagrams database from a mobile phone.

An online anagrams database accessible via SMS will be an invaluable aid for crossword enthusiasts. It will always be available (provided you have your mobile phone) and so can help you at any time or place. In the preferred embodiment the first character needs to be a full stop (.) and the last character an exclamation mark (!).

### Encyclopedia

Encyclopedias are often heavy (multivolume) objects which are generally only available for reference use.

The embodiment of this invention allows access to the largest, most obscure facts (generally only available in the largest encyclopedias) from one's mobile phone. This encyclopedia may be browsed anywhere, at any time. Since it is continually updated, one never needs to buy a new edition.

The encyclopedic function embodying the invention simply requires the word or phrase to be input. The word or phrase may be anything provided it does not include one of the other reserved characters in a prescribed position. In some cases, for example if the input was "female swan", then the response would be well defined and further inputs would probably not be required to focus on what specifically was required. However, if the input word was "Mercury" then there are any number of different interpretations of this word, for example: "element", "planet" or "Roman god".

In order to identify which of these the user is interested in, it is necessary to send the user a menu with choices. In the preferred embodiment, digit choices have been used, so that if Mercury the planet was Item 2 on the list of possible interpretations of the word Mercury then replying with the digit 2 would then lead to characteristics of the planet Mercury being sent as a response.

### Phrase Books

The invention may also allow a mobile phone to function as a phrase book. It may be used while on business or on holiday, and removes the need to carry a phrase book. The function is always available, so it is not necessary to anticipate a requirement for a phrase book.

In the preferred embodiment the phrase book functionality is recognised by an efficient and intuitive two character sequence. One of which is a question mark (?) and the other is either D for German, E for Spanish, F for French or I for Italian. So for example, F? means that the following phrase is a French phrase and the response will be the English translation of that phrase. ?F would be followed by an English phrase which requires to be translated into the French.

### Study Topics

A student often needs to learn particular topics. This system provides access to these topics at all times and in all places, via a mobile phone. This provides a substantial benefit, for uncertainties or misconceptions may be readily removed through use of the mobile phone. Menu choices may stimulate students' interest in a topic and encourage further queries.

In some cases it would be useful to be able to focus in on a particular topic which a user wishes to explore. This is equivalent to picking up a text book with a specific focus. Examples of such topics could be subjects which are taught in schools such as Maths or Science. The user can set a topic restriction at any time with a simple, intuitive input (e.g. /maths). Thereafter input is searched within the chosen topic only. The user can remove the topic restriction at any time by simply sending a lone forward slash (/).

To avoid inadvertent restriction of the search space due to a previously set topic restriction, the system will indicate that a topic restriction is in force and indicate how to remove it in the event that no match is returned from a search.

### Miscellaneous Information / Useful Numbers

When unexpected events occur, it may be necessary to access arbitrary information quickly. Again, this invention provides the answer through the use of a mobile phone.

The benefits of a useful numbers feature are:
- potentially cheaper than having to pay directory enquiries;
- improved accuracy as numbers are in visible text rather than voiced;
- short and long term usability as numbers are in a saveable message;
- instantly usable without having to make a separate note of the number as most phones allow calling of numbers embedded in SMS messages;
- the user will know whether or not they have the number for the correct name as both the name and number are given;
- multiple numbers received easily.

In the preferred embodiment Miscellaneous Information sections and the Useful Numbers sections have the same syntax as the encyclopedia category. The Useful Numbers category simply gives a list of useful phone numbers in response to the request.

### Web Access

Web Access within this invention is a major benefit as mobile phone users will use the existing SMS mobile phones technology to view and select information that has been published on the World Wide Web by any organisation or individual that chooses to.

For example an organisation publishes the contact details of its various offices. The mobile phone user can access this organisation's contact details by simply sending the organisation's name in a special format (in the preferred embodiment the special format is simply the "@" symbol followed by the name). The mobile phone user will receive a page of information suitably formatted for the mobile phones screen size. The mobile phone user can then send messages with a choice selection, e.g. single characters, to navigate through pages to focus on the particular information required.

Benefits:
- the publishing of information, the content and arrangement of pages is under the control of any organisation or individual that chooses to do so;
- the information may be stored anywhere on the World Wide Web;
- web access is available on today's SMS mobile phone technology'
- the information for an organisation can initially be reached with a short, simple, intuitive message format;
- short, simple messages, e.g. single characters, can be used for navigation, as the invention tracks the potentially long URL for the current page.

### Preferred Embodiment: System Description

The preferred embodiment of this invention, known as "smsWizard", will now be described.

The term "User" is used within this description to mean a mobile phone user sending and receiving SMS messages.

As shown in Figure 1, a mobile telephone network includes mobile telephones or stations MS (1) which communicate (2,35) with a local base station BTS (3) itself connected to a mobile switching centre MSC (5). The MSC (5) communicates (6,8), using the Mobile Application Protocol (MAP), with a Short Message Service Centre SMS-C (7). The MSC (5) also communicates (9,33) with smsWizard Equipment, to be described.

The smsWizard equipment includes a protocol translator (10) which communicates with the MSC (5), the protocol translator (10) interfacing between the MSC protocol, such as MAP, and the interface of an smsWizard controller (12). SMS messages are delivered to the controller (12) over a line (11). The controller (12) processes SMS messages into actions on the other system components and provides SMS message replies to the MS (1) via the SMS-C (7). The controller (12) sends requests (13) to get or create store entries for the respective MS's CLI (calling line identity), the requests (13) being sent to a hashing function (14) which provides a powerful indexing system that uses the MSs' CLIs to access a store entry for the respective MS's CLI. A request (15) for a specific record is sent to a store (16) which is a memory device for storing an entry for each MS's CLI with values such as Domain, Root and Topic (described below). An entry (17) retrieved from the store (16) is sent, via the hashing function (14), on (18) to the controller (12). The controller (12) also communicates (19) with a log (20) which is a memory device for sets of data detailing failed searches. Databases (22), which are separately accessible and searchable, include sets of indexes and information, and search requests (21) are sent from the controller (12) to the databases (22) with search results (23) being sent back. Separately accessible engines (25) receive information processing requests (24) from the controller (12), with information results (26) being sent back. Web access (28) may also be provided by a device for interfacing to the Internet (30) via a bi-directional communications channel and protocol (29), requests (27) for Internet pages being sent from the controller (12), and results (31) of the requested pages being sent back. Once the controller (12) has assembled the required information, the resulting SMS message (32) destined for one of the MSs is sent to the protocol translator (10).

Figure 1 also shows a corporate website with a connection (36) to the Internet (30). The connection (36) is to a corporate web server (39) which sends the search requests (37) for required web pages to a corporate data store (40), the resulting pages being sent back (38) to the server (39), from which they are routed back over the Internet (30) to the smsWizard equipment.

In operation, and by way of example, assume that a User wants to know the population of Canada. The User decides to use smsWizard to find the answer, and assume that this is the first time the User has accessed smsWizard.

### First Enquiry

The User keys in "CANADA" as an SMS message on the phone (1) and sends it to smsWizard (the number for which is likely to have been programmed into the phone for convenience).

The SMS message travels through the mobile network (2,3,4,5,6) to the SMS-C (7) which forwards the message to the smsWizard Equipment (8,5,9).

The Protocol Translator (10) accepts the message via a mobile network protocol (such as MAP) and forwards it (11) to the smsWizard Controller (12).

The smsWizard Controller (12) will be able to derive the following values from the message:
- the CLI (calling line identity) of the Users phone (1);
- the identity of the SMS-C (7);
- the date and time the SMS-C (7) received the message with timezone information;
- the text of the message (currently up to 160 characters long of characters from a defined alphabet);

The smsWizard Controller (12) will access the Hashing Function (14) to retrieve or create-a-blank memory entry for this CLI in the Store (16). The memory entry will have values for:
- the current Domain for this CLI;
- the current Root for this CLI;
- the current Topic for this CLI.

Other values could be stored for each CLI.

The Hashing Function (14) is a powerful indexing system optimised for telephone numbers that enables fast access to a non-stop, on-line, rapidly changing memory store where active entries in it require no re-organisation, or minimal re-organisation. (Domain is the smsWizard term for the current area of the knowledge base that this User is searching. Root is the smsWizard term for the current context of the current search in the current Domain. Topic is the smsWizard term for a specific knowledge area restriction set by the User).

As this is the first time this User has accessed smsWizard the Hashing Function (14) will create a new blank entry in the Store (16) for this CLI and return (18) blank values for Domain, Root and Topic.

The smsWizard Controller (12) will process the text of the message (e.g. remove leading and trailing blanks) to construct the Input. Then it will check whether the Input needs to be processed in context, i.e. according to the Domain, Root and Topic settings, in this case they are blank and there is no current context. Then it will look for specific action characters in the Input, in this case there are none. Finally it will do a search for information relating to the input across the knowledge base.

The smsWizard Controller will perform the search in several phases: a case-sensitive search, then a case-insensitive search. Further phases could be added to the search such as a "best-fit" search that might use techniques such as wildcards.

Each phase of the search will access the Databases (22) in the following order:
- Current Topic
- Encyclopedia
- Facts
- Miscellaneous
- Numbers
- All possible Topics

The smsWizard Controller (12) stops the search when a match is found between the Input and the Index of some Information in a Database.

In this case there is no current Topic and we will assume that there is an Index match (case-sensitive) for "CANADA" in the Encyclopedia Database, as follows:

| **Index** | **Information** |
|---|---|
| CANADA\ | CANADA: 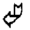 |
| | 1 - IDD Code 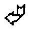 |
| | 2 - Capital 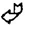 |
| | 3 - Currency 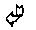 |
| | 4 - Language 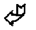 |
| | 5 - Area 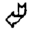 |
| | 6 - Population 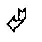 |
| | 7 - GDP 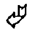 |
| | 8 - Location 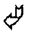 |
| | 9 - Other 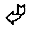 |
| | Send choice 1-9 |

| | |
|---|---|
| ( 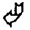 represents an embedded newline character) | |

The trailing backslash (\) does not affect the database search and match on Index, however, the smsWizard Controller (12) uses it to indicate that future user messages may depend on the context of this match. To remember the context the smsWizard Controller (12) instructs the Hashing Function (14) to change the entry for this CLI in the Store (16) so that Domain is "Encyclopedia" and Root is "CANADA\".

Other symbols could be used in place of backslash, or different techniques for identifying a Root could be used.

The smsWizard Controller (12) constructs an SMS message with:
- the Information from the database match as the text
- the Users CLI as the destination

The smsWizard Controller (12) sends the SMS message via the Protocol Translator (10) to the SMS-C (7).

When possible, the SMS-C (7) delivers the SMS message to the User (8,5,34,3,35,1).

The User will receive the SMS message on the mobile phone.

### Context Based Search

A context based search is defined as one where the Domain and Root are previously set and the user sends a single character "1" to "9","0","*" or "#".

The user now keys in "6" as an SMS message and sends it to smsWizard, in order to find out about the population of Canada.

The SMS message is received at the smsWizard Controller (12), the Domain, Topic and Root, are retrieved from the Store (16) as described before.

The smsWizard Controller (12) will process the text of the message (e.g. remove leading and trailing blanks) to construct the Input. Then it will check whether the Input needs to be processed in context, i.e. according to the Domain, Root and Topic settings.

In this case, because the Input is a single digit and the Domain and Root are set the search is context based. The Input is processed to become the Root with the Input appended ("CANADAV6"). This Input is used to do a case-sensitive search on the Encyclopaedia Database. There will be an Input to Index match as follows:

| **Index** | **Information** |
|---|---|
| CANADAV6 | Canada: 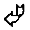 |
| | Population 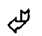 |
| | 31006347 (est. July 1999) 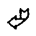 |
| | Life expectancy: 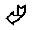 |
| | male 76.1 yrs 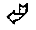 |
| | female 82.8 yrs |

| | |
|---|---|
| ( 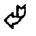 represents an embedded newline character) | |

Because this was a context based search using Domain and Root, the smsWizard Controller (12) changes the Root to be Index value "CANADAV6" in the Store (16) in the same way as before.

The Information is put in an SMS message and sent to the User in the same way as before.

### Logging Failed Searches

The User now sends the message "mercurous" to smsWizard.

For illustrative purposes "mercurous" is not in the smsWizard knowledge base.

The SMS message is received at the smsWizard Controller (12), the Domain, Topic and Root, are retrieved from the Store (16) as before.

The smsWizard Controller (12) processes the text of the message (e.g. remove leading and trailing blanks) to construct the Input. This is not a context based search and the Input does not contain an action character, so smsWizard uses all search phrases across all databases. There is no match.

The smsWizard Controller (12) constructs an SMS reply message with the text "Sorry, information not found." and sends it to the User.

The smsWizard Controller (12) outputs an entry to the Log (20) with:
- all the values from the SMS message;
- the Domain value;
- the Root value;
- the Topic value;
- the Input value;
- the text of the SMS reply message;

The Log (20) entries may be used by the smsWizard operator to add "mercurous" to the knowledge base. The operator could also choose to send the entry for "mercurous" to the User as the Log (20) entry will contain the CLI.

### Syntax Of Incoming Messages

smsWizard uses a simple model for user input that is both intuitive and optimised for mobile phone keyboard entry.

Special single character input:
- "1" to "9", "0", "*", "#" context based search from last menu
- "/" remove topic restriction

Prefixes:
- "@" use Web Access (28), e.g. "@Telsis"
- "." use Dictionary Database, e.g. ".owl"
- "*x*?" use a "to English" Phrase Book Database to English,
   where *x* is: D, E, F, I for German, French, Spanish, Italian, e.g. "F? voiture"
- "?*x*" use a "from English" Phrase Book Database, *x* as above, e.g. "?F car"
- "/" set current topic
- "/?" returns the current topic setting or a message that no topic is set
- "/list" returns list of valid topics

### Terminators:

- "=" use Maths Engine in Engines (25)

### Other symbols:

- : fast mode operator

All input not matched by above rules is used to search the rest of the knowledge base as already described.

### Using The Calculator

The User sends the message "1024/16=" to smsWizard.

The SMS message is received at the smsWizard Controller (12), the Domain, Topic and Root, are retrieved from the Store (16) as described before.

The smsWizard Controller (12) processes the text of the message (e.g. remove leading and trailing blanks) to construct the Input. It detects the action character "=" at the end of the Input. It sends the Input to the Maths Engine in the Engines (25). The Maths Engine will compute the answer and construct a Result message, e.g. "1024/16 = 64" that is sent back to the smsWizard Controller (12).

The smsWizard Controller (12) constructs an SMS reply message with the text Result message and sends it to the User.

The Domain, Root and Topic are left unchanged.

Unlike most calculators, this calculator is able to operate with very high precision and dynamic range. It also contains databases for derivatives, integrals and mathematical formulae.

### Accessing The Web

The User sends the message "@Telsis" to see web pages for the organisation called "Telsis".

The SMS message is received at the smsWizard Controller (12), the Domain, Topic and Root, are retrieved from the Store (16) as described before.

The smsWizard Controller (12) processes the text of the message (e.g. remove leading and trailing blanks) to construct the Input. It detects the action character "@" at the start of the Input indicating that this is a web search.

In these examples, ".com" is used for illustrative purposes. In practice it would be possible to also search other suffices such as ".org" or ".co.uk" before returning a 'not found' result.

The smsWizard Controller (12) constructs a URL in the form "www.Telsis.com/smsWizard" and sends it to the Web Access (27) that looks for the URL on the Internet (30,36,39,37,40,38) to find a web page.

If a page is not found then the Web Access (27) indicates this condition to the smsWizard Controller (12) which constructs an SMS message with the text "www.Telsis.com/smsWizard not found" and sends it to the User.

If a page is found then the Web Access (27) will format the content of the page into an SMS friendly format and return the Result to the smsWizard Controller (12). The smsWizard Controller (12) constructs an SMS reply message with the text Result message and sends it to the User. The smsWizard Controller (12) changes the Domain to be "Web" and the Root to be the Input ("www.Telsis.com/smsWizard") in the Store (16) in the same way as shown before.

| **URL** | **Information** |
|---|---|
| www.Telsis.com/smsWizard | @Telsis: 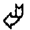 |
| | 1 the company 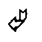 |
| | 2 Ocean 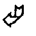 |
| | 3 fastSSP 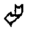 |
| | 4 fastIP 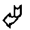 |
| | 5 fastSCP 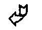 |
| | 6 fastTC 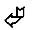 |
| | 7 fastSCE 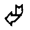 |
| | 8 other 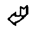 |
| | 9 contact 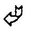 |
| | Send choice 1-9 |

| | |
|---|---|
| ( 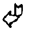 represents an embedded newline character) | |

The User then sends the message "3" to smsWizard to see choice 3 offered on the web page.

The SMS message is received at the smsWizard Controller (12), the Domain, Topic and Root, are retrieved from the Store (16) as before.

Then it will check whether the Input needs to be processed in context, i.e. according to the Domain, Root and Topic settings.

In this case, because the Input is a single digit and the Domain and Root are set the search is context dependent. The Input is processed to become the Root with the Input appended ("www.Telsis.com/smsWizard/3").

Because the Domain is "Web" a URL is constructed as the Root with a ".htm" suffix ("www.Telsis.com/smsWizard/3.htm") and sends it to the Web Access (27) that looks for the URL on the Internet (30). The Internet is searched and the results processed in the same way as shown before.

| **URL** | **Information** |
|---|---|
| www.Telsis.com/ | @Telsis: 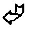 |
| smsWizard/3.htm | fastSSP 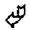 |
| | 1 details 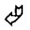 |
| | 2 Compact 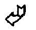 |
| | 3 Standard 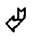 |
| | 4 Extended 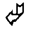 |
| | 5 Large 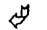 |
| | 6 footprint 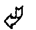 |
| | 7 DTMF option 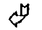 |
| | 8 Audio option 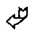 |
| | 9 other 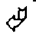 |
| | Send choice 1-9 or 0 back |

| | |
|---|---|
| ( 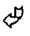 represents an embedded newline character) | |

### Topics

The User wishes to find information about the mathematical concept of volume.

The User sends the message "/Mathematics" to smsWizard. The smsWizard Controller (12) causes the entry for this CLI in the Store (16) to be changed so that Topic is set to "Mathematics".

The User sends the message "VOLUME" to smsWizard. Domain, Root, Topic are retrieved, and Input is derived in the same way as before.

As the Input is not a choice from the previous menu this is not a Domain and Root context based search. The Topic value is set so this is a Topic context based search.

The smsWizard Controller (12) starts the search in the current topic, the Mathematics Database, this results in the following match:

| **Index** | **Information** |
|---|---|
| VOLUME\ | Volume: 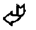 |
| | 1 Cone 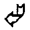 |
| | 2 Cube 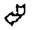 |
| | 3 Cylinder 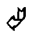 |
| | 4 Pyramid 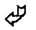 |
| | 5 Sphere 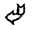 |
| | Send choice 1 - 5 |

| | |
|---|---|
| ( 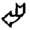 represents an embedded newline character) | |

To remember the context, so as to be able to process User choices from this information, the smsWizard Controller (12) instructs the Hashing Function (14) to change the entry for this CLI in the Store (16) so that the Domain is "Mathematics" and the Root is "VOLUME\".

The User then decides to make a general query, so the User first needs to remove the "Mathematics" topic search restriction. The User sends the message "/" to smsWizard.

The smsWizard Controller (12) causes the entry for this CLI in the Store (16) to be changed so that Topic is set to blank.

### Structure of Knowledge Base

A benefit of SMS Wizard is that it provides a simple and elegant definition for the data structure of the knowledge base. This structure allows a diverse range of topics to be formatted suitably for inclusion into the SMS Wizard system. This open standard also allows third parties to prepare data into a suitable form for use with SMS Wizard. It also allows user-community specific databases to be made available, for example for corporate applications.

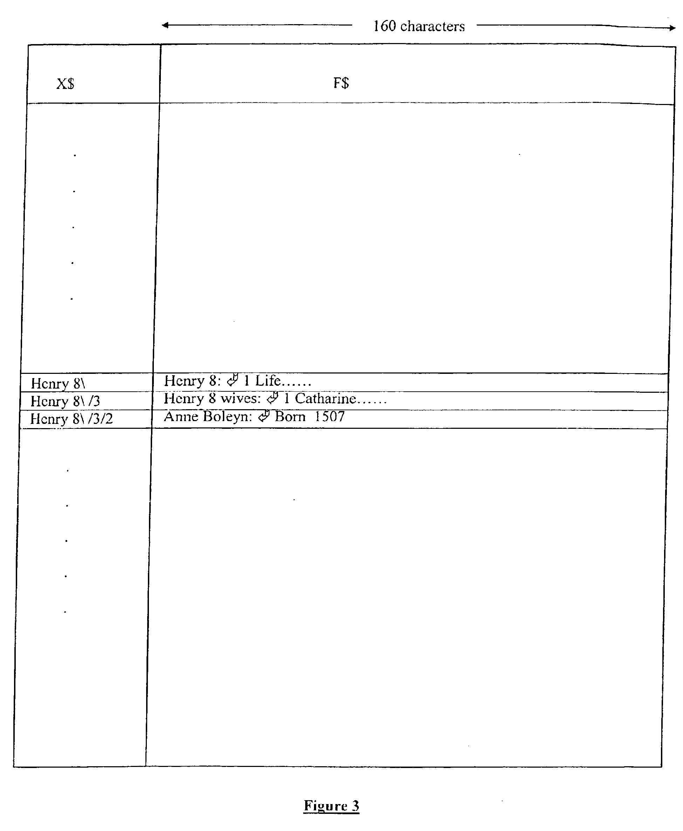

The data structure is illustrated in Figure 3 and comprises 2 fields. The first is an Index (String (X$) which is matched using a hashing technique, and the second is an InfoString (F$) field corresponding to the short message text to be returned, or alternatively comprising an indirection operator which causes a new search as described below.

The Index String X$ takes one of two forms:
a) A text String followed by \, known as a 'Root'.
b) A text string followed by \, and one or more indexes of the form /n where n is a number in the range 1-9.

The following is an extract from an example Maths Domain database which illustrates the database structure.

| **Index** | **Information** | **Category** |
|---|---|---|
| Circle theorems\ | CIRCLE THEOREMS: | Maths Topic |
| | 1 Angle | |
| | 2 Chord | |
| | 3 Tangent | |
| | 4 Cyclic quadrilateral | |
| | Send choice 1-4 | |
| Angle theorems\ | ANGLE THEOREMS: | Maths Topic |
| | 1 Angle at circumference subtended by diameter is a right angle | |
| | 2 Angle at centre is twice angle at circumference. | |
| | # for more | |
| Chord theorems\ | CHORD THEOREMS: | Maths Topic |
| | 1) Line joining mid-point of chord to centre is perpendicular to chord | |
| | 2) Chords of equal length are equidistant from centre | |
| Tangent theorems\ | TANGENT THEOREMS: | Maths Topic |
| | 1) Two tangents to circle from point are equal length | |
| | 2) Line from same point to the centre bisects the angle to the tangents | |
| Cyclic quadrilateral\ | CYCLIC QUADRILATERAL: | Maths Topic |
| | is a quadrilateral where the four corners all lie on a circle | |
| Circle theorems\/1 | ^Angle theorems | Maths Topic |
| Circle theorems\/2 | ^Chord theorems | Maths Topic |
| Circle theorems\/3 | ^Tangent theorems | Maths Topic |
| Circle theorems\/4 | ^Cyclic quadrilateral | Maths Topic |

The table makes use of the indirection operator in some of the Information fields. Instead of returning the contents of the Information field to the user, the operator causes SMS Wizard to resubmit the Information, without the character, as the Index of a new search. This allows an Index to appear once in the database as as a master definition, but to be referred to many times by the leaves of different database branches.

In the example, a search for "Cyclic quadrilateral" would return the definition directly, whereas a search for Circle Theorems would present the user with four choices. Choice 4 would look up Circle TheoremsV, which rather than defining cyclic quadrilateral again, indirects to the master definition found under the Index "Cyclic quadrilateral".

### Knowledge Base Data Changes

The User may take a long time between receiving a reply message from smsWizard and sending a choice message back.

In this time the smsWizard knowledge base may have changed such that the context stored in Domain and Root, together with the choice, no longer reference the same information as indicated in the reply message.

The smsWizard knowledge base is a fixed or growing body of fairly static knowledge. Growth of the information can normally be constrained to adding new choices, rather than changing existing ones. However there may be cases where the structure does have to change.

smsWizard could keep a Reference in the Store (16) that uniquely identifies the Information found. When the User sends a choice for a context based search smsWizard could check that the Reference still exists. If it does, processing continues as normal. If the Reference does not exist, indicating that the context is no longer relevant, a suitable message can be sent back to the User.

### Techniques for Traversing Trees

As a further improvement the smsWizard equipment could use "0", "*" and "#" single characters to provide "up", "back" and "next" facility.

The "0" can be used to cause the removal of single character selections from the root string, one at a time, until only the "\" is left. This means that "0" input causes smsWizard to go back one level of menu choice.

For example, given a root string of "Mercury\/2", sending "0" as input would make the root string "Mercury\" and the appropriate information entry would be returned.

Sending another "0" would not change the root string as the last character is a "\" and the information entry for the root string would be returned.

The "#" can be used to cause an increment and rollover of digit selections. This means that "#" input causes smsWizard to go to the next menu choice at this level, and to cycle round the choices.

For example, given the root string "Mercury\/2", sending "#" as input would make the root string "Mercury\/3" (providing there was an entry that matched) and the appropriate information would be returned. Given that there are three entries for Mercury, then the next "#" input would initially make the root string "Mercury\/4", but since there is no match then the root string would become "Mercury\/1" and the appropriate information entry would be returned.

The "*" can be used to decrement and rollback digit selections. This means that "*" input causes smsWizard to go to the previous menu choice at this level, and to cycle back if the previous choice is absent.

For example, given the root string "Mercury\/2", sending "*" would make the root string "Mercury\/1" (providing there was an entry that matched) and the appropriate information would be provided. Given that there are three entries for Mercury, then the next "*" input would initially make the root string "Mercury\/9" but since there is no match, the root string would continue decrementing to "Mercury\/3" and the appropriate information would be returned.

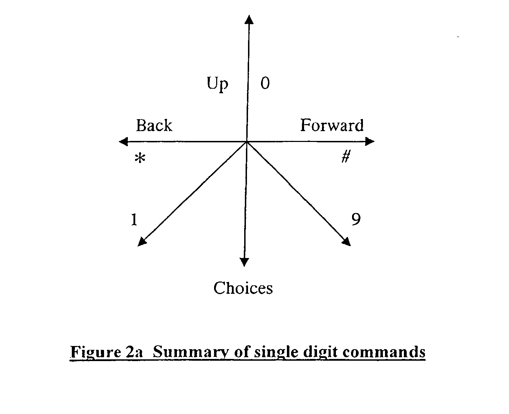

Diagrammatically the action of "0", "*" and "#" described above would be as shown in Figure 2. A summary of the single key selections is provided in Figure 2a.

It would also be possible to have multiple special keys (0, *, #) to allow navigation up or along trees. For example 00 would take you up two levels and 0# would take you up one level and increment the branch by one. These special cases have not been represented in the flow diagram.

Other techniques for traversing trees of knowledge are possible.

### Fast Mode

It is likely that experienced users will be able to anticipate menu choices, and may wish to save time and money by making a single request. As a further improvement this may be achieved using a ":" separator. If a user sends the message "Canada:capital" the initial search will be for the keyword "Canada", and a match will be found. However, this matched information string is not sent to the user. Instead, a search is made for the word "capital" within the matched information string and it is found to be choice 2 in the information provided for "Canada". The root is now set to "CanadaV2" and a new search is started. The user is sent the reply to this new search.

If the user has used a keyword which does not exist in the database, smsWizard will return the information string for the last successful search. For example, if the user sends the message "Canada:Lakes" and no match can be found in the information string, the root is set to "Canada\" and the information string for "Canada\" is sent to the user.

The advantage of this approach is that it is then a very small step to provide a simple natural language front end to smsWizard. For example, if the user input "Capital of Canada" the word "of" would be recognised, and the command could be reformatted as "Canada:Capital" and the search may continue.

### Choices

Although the preferred embodiment uses single key entry for choices, smsWizard can be enhanced to allow free form entry of choice with an automatic or manual technique for Root clearing and with a mechanism that uses knowledge of offered list of choices to make the correct interpretation - this could involve the use of multiple Roots and Domains.

### Further Information

As more information may be held within the system or on the Web than can easily be sent to the mobile phone, the smsWizard user interface and system can be enhanced to allow further information to be forwarded to the User by fax, email, voice or other suitable media. This capability would allow images, long descriptions, diagrams, audio, etc to be provided conveniently.

### Preferred Embodiment: Functional Description

The following pages provide an introduction to the system both from a user and technical viewpoint, so that the benefits and structure of smsWizard can be clearly understood.

### 5.1 smsWizard syntax

| | | | |
|---|---|---|---|
| **Calculator:** | <input string>= | | |
| | | | |
| **Dictionary:** | <word, phrase or string> | | |
| | | | |
| **Encyclopedia:** | <word, phrase or string> | | |
| | | | |
| **Facts (Facts and figures):** | <word, phrase or string> | | |
| | | | |
| **Miscellaneous** | <word, phrase or string> | | |
| **(Miscellaneous info):** | | | |
| | | | |
| **Phrase Books:** | D? <word, phrase or string> for German to English | | |
| | | | |
| | ?D <word, phrase or string> for English to German | | |
| | | | |
| | E? <word, phrase or string> for Spanish to English | | |
| | | | |
| | ?E <word, phrase or string> for English to Spanish | | |
| | | | |
| | F? <word, phrase or string> for French to English | | |
| | | | |
| | ?F <word, phrase or string> for English to French | | |
| | | | |
| | I? <word, phrase or string> for Italian to English | | |
| | | | |
| | ?I <word, phrase or string> for English to Italian | | |
| | | | |
| **Topics (Study topics)**: | /<topic> | to define topic | |
| | / | to remove topic restriction | |
| | <input string> for general search | | |
| | {Topics are: | | maths |
| | | | science |
| | | | chemistry |
| | | | physics |
| | | | biology |
| | | | history |
| | | | geography} |
| | | | |
| **Numbers (Useful numbers):** | <organisation or request> | | |
| | | | |
| **Web access:** | @<company or topic> | | |
| | | | |
| **Fast Mode:** | [optional smsWizard mode command] <word, phrase or string>: <word, phrase or string> [optional :'s for deeper searches] | | |

In all these cases, string refers to any character sequence, (e.g. "B52" or "-):")

### sms Wizard examples

| | | | | | | |
|---|---|---|---|---|---|---|
| **Calculator:** | Input: | 12!= | | | | |
| | Response: | 12!= | | | | |
| | | 479001600 | | | | |
| | | (9 digits) | | | | |
| | | | | | | |
| | Input: | sin(3x)= | | | | |
| | | | | | | |
| | Response: | sin(3x)= | | | | |
| | | 3*sin(x)-4*((sin(x))**3) | | | | |
| | | | | | | |
| | Input: | 0.4*sin(20)= | | | | |
| | | | | | | |
| | Response: | 0.4* sin(20)= | | | | |
| | | 0.136808057 | | | | |
| | | | | | | |
| **Dictionary:** | Input: | .hawser | | | | |
| | | | | | | |
| | Response: | hawser: | | | | |
| | | thick rope or cable for holding ship | | | | |
| | | | | | | |
| | Input: | .petard | | | | |
| | | | | | | |
| | Response: | petard: | | | | |
| | | a small bomb; a kind of firework | | | | |
| | | | | | | |
| **Encyclopedia:** | Input: | Female swan | | | | |
| | | | | | | |
| | Response: | A female swan is a pen | | | | |
| | | | | | | |
| | Input: | Canada | | | | |
| | | | | | | |
| | Response: | Canada: | | | | |
| | | 1 -1DD Code | | | | |
| | | 2 - Capital | | | | |
| | | 3 - Currency | | | | |
| | | 4 - Language | | | | |
| | | 5 - Area | | | | |
| | | 6 - Population | | | | |
| | | 7-GDP | | | | |
| | | 8 - Location | | | | |
| | | 9 - Other | | | | |
| | | Send choice 1-9 | | | | |
| | | Subsequent input: | | 2 | | |
| | | | | | | |
| | | Subsequent response: Canada: | | | | |
| | | Capital: | | | | |
| | | Ottawa | | | | |
| | | | | | | |
| **Facts and figures:** | Input: | Acre: | | | | |
| | | | | | | |
| | Response: | ACRE: I acre is 4840 square yards or | | | | |
| | | 43560 square feet or | | | | |
| | | 4046.8562 square metres | | | | |
| | | NOTE: A hectacre is 10000 square metres approximately 2.471 acres | | | | |
| **Miscellaneous info:** | Input: | Height of Everest | | | | |
| | | | | | | |
| | Response: | Height of Everest: | | | | |
| | | 8,850 metres or 29,035 feet | | | | |
| | | | | | | |
| **Phrase Books:** | German (D) | Input: | D? tatsächlich | | | |
| | | | | | | |
| | | Response: | D? tatsächlich | | | |
| | | | "indeed" | | | |
| | | | "certainly" | | | |
| | | | | | | |
| | | Input: | ?D I would like | | | |
| | | | | | | |
| | | Response: | ?D I would like | | | |
| | | | "Ich möchte" | | | |
| | | | | | | |
| | Spanish (E) | Input: | E? cuando | | | |
| | | | | | | |
| | | Response: | E? cuando | | | |
| | | | "when" | | | |
| | | | | | | |
| | | Input: | ?E I'm English | | | |
| | | | | | | |
| | | Response: | ?E I'm English | | | |
| | | | "Soy inglès" | | | |
| | | | | | | |
| | French (F) | Input: | F? voiture | | | |
| | | | | | | |
| | | Response: | F? voiture | | | |
| | | | la voiture | | | |
| | | | "the car" | | | |
| | Italian (I) | Input: | | ?I What time is it | | |
| | | | | | | |
| | | Response: | | ?I What time is it | | |
| | | | | "Che ora è" | | |
| | | | | | | |
| **Study topics:** | Maths: | Input: | | Sine Law | | |
| | | | | | | |
| | | Response: | | Sine Law: (a/sinA)=(b/sinB)-(c/sinC) where for a triangle with sides a, b, c and side a is opposite angle A ... | | |
| | Science: | Input: | | Archimedes' principle | | |
| | | | | | | |
| | | Response: | | ARCHIMEDES' PRINCIPLE: | | |
| | | | The weight of liquid displaced by a floating body is equal to the weight of the body | | | |
| | | | | | | |
| | Chemistry: | Input: | | Antimony | | |
| | | | | | | |
| | | Response: | | ANTIMONY: | | |
| | | | Sb | | | |
| | | | Atomic No.=51 | | | |
| | | | Atomic Wt.=121.75 | | | |
| | | | | | | |
| | Physics: | Input: | | Boyle's Law | | |
| | | | | | | |
| | | Response: | | BOYLE'S LAW: | | |
| | | | The volume of an ideal gas is inversely proportional to pressure | | | |
| | | | So p*v=constant | | | |
| | | | Named after Robert Boyle (1627-1691) | | | |
| | | | | | | |
| | Biology: | Input: | | Osmosis | | |
| | | | | | | |
| | | Response: | | OSMOSIS: | | |
| | | | is the passage of water from a region of high water concentration through a semi-permeable membrane to a region of low water concentration | | | |
| | | | | | | |
| | History: | Input: | | Henry 8 | | |
| | | Response: | Henry 8: | | | |
| | | | 1. Life | | | |
| | | | 2. King | | | |
| | | | 3. Wives | | | |
| | | | 4. Children | | | |
| | | | 5. Other | | | |
| | | | Send choice 1-5 | | | |
| | | | | | | |
| | | | Subsequent input: | | 3 | |
| | | | | | | |
| | | Response: | | 1. | Catharine of Aragon | |
| | | | | | 2. Anne Boleyn | |
| | | | | | 3. Jane Seymour | |
| | | | | | 4. Anne of Cleves | |
| | | | | | 5. Catharine Howard | |
| | | | 6. | Catharine Parr | | |
| | | | Send choice 1-6 | | | |
| | | | | | | |
| | | | Subsequent input: | | 2 | |
| | | | | | | |
| | | | Response: | Anne Boleyn: | | |
| | | | | Born 1507 | | |
| | | | | Her early years were at the | | |
| | | | | French court | | |
| | | | | Mother of Elizabeth 1 | | |
| | | | | Executed 19 May 1536 so | | |
| | | | | Henry could pursue his passion for Jane Seymour | | |
| | | | | | | |
| | Geography: | Input: | Snowline | | | |
| | | | | | | |
| | | Response: | The snowline marks the level on a mountain above which there is permanent snow - even in summer | | | |
| | | | | | | |
| **Useful numbers:** | Input: | Amex | | | | |
| | | | | | | |
| | Response: | American Express 0800 339911 | | | | |
| | | Lost/stolen cards 01273 222 9633 | | | | |
| | | Travellers cheque claims 0800 521313 | | | | |
| | | General enquiries 01273 693555 | | | | |
| | Input: | Ferries | | | | |
| | | | | | | |
| | Response: | P&O Stena 0870 6000600 | | | | |
| | | Sea France 0990 711711 | | | | |
| | | | | | | |
| | | | | | | |
| | | | | | | |
| | | | | | | |
| | Input: | Windscreens | | | | |
| | | | | | | |
| | Response: | A 1 Windscreens 0800 248888 | | | | |
| | | Autoglass 0800 363636 | | | | |
| | | National Windscreens 0800 622122 | | | | |
| | | | | | | |
| | Input: | NHS Direct | | | | |
| | | | | | | |
| | Response: | NHS DIRECT | | | | |
| | | (24 hour Helpline): 0845 46 47 | | | | |
| | | | | | | |
| **Web Access:** | Input: | @Telsis | | | | |
| | | | | | | |
| | Response: | @Telsis | | | | |
| | | 1 the company | | | | |
| | | 2 Ocean | | | | |
| | | 3 fastSSP | | | | |
| | | 4 fastIP | | | | |
| | | 5 fastSCP | | | | |
| | | 6 fastTC | | | | |
| | | 7 fastSCE | | | | |
| | | 8 other | | | | |
| | | 9 contact | | | | |
| | | Send choice 1-9 | | | | |
| | | | | | | |
| | | Subsequent input: | | 3 | | |
| | | | | | | |
| | | Subsequent response: @Telsis: 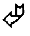 | | | | |
| | | | fastSSP 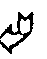 | | | |
| | | | 1 details 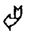 | | | |
| | | | 2 Compact 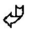 | | | |
| | | | 3 Standard 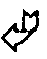 | | | |
| | | | 4 Extended 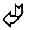 | | | |
| | | | 5 Large 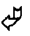 | | | |
| | | | 6 footprint 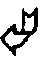 | | | |
| | | | 7 DTMF option 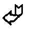 | | | |
| | | | 8 Audio option 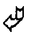 | | | |
| | | | 9 other 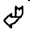 | | | |
| | | | Send choice 1-9 or 0 back | | | |
| | | | | | | |
| **Integrals:** | Input: | I(sin(x))= | | | | |
| | | | | | | |
| | Response: | Integral of sin(x)= | | | | |
| | | -cos(x) | | | | |
| **Derivatives:** | Input: | D(sin(x))= | | | | |
| | | | | | | |
| | Response: | Derivative of sin(x)= | | | | |
| | | cos(x) | | | | |
| | | | | | | |
| **Anagrams:** | Input: | .top! | | | | |
| | | | | | | |
| | Response: | Anagrams of top: | | | | |
| | | opt, pot, top | | | | |
| | | | | | | |
| **Fast Mode:** | Input: | Henry 8: Wives:Anne Boleyn | | | | |
| | | | | | | |
| | Response: | Anne Boleyn: | | | | |
| | | Born 1507 | | | | |
| | | Her early years were at the French court | | | | |
| | | Mother of Elizabeth 1 | | | | |
| | | Executed 19 May 1536 so Henry could pursue his passion for Jane Seymour | | | | |

### smsWizard Input String Preprocessing

Takes user entered string C$ and modifies it such that input string internally is I$=I(1)...I(K).

Modifications are:
i) all white spaces are converted to spaces
ii) all sequences of spaces are reduced to one space
iii) any initial space is removed
iv) any trailing space is removed.

Therefore I(1) and I(K) are printing characters and K is total length of printing string (which may include spaces).

### smsWizard string descriptors

- C$: Character string input by user
- I$: Input string to smsWizard engine, where I$ is a processed version of C$
- F$: Info string in database record
- H$: Holding string for Domain
- O$: Old string
- P$: Representation for any non-specific string (i.e. no literals)
- R$: Root string
- S$: Temporary Root string
- T$: Temporary string
- W$: Input string to Web engine
- X$: Index string in database record

### smsWizard nomenclature

| | |
|---|---|
| DOMAIN - | An information area where the current ROOT was set. |
| ROOT - | A ROOT acts as the first entry of a tree of entries, and initialises the ROOT STRING. |
| ROOT STRING - | The ROOT STRING is the current position in the current DOMAIN and is the accumulation, with separators, of the ROOT and the Users choice inputs. |
| TOPIC - | A topic flag which may be set by the user to restrict the scope of a search. |

### smsWizard Domains

In the preferred embodiment the initial domains supported by smsWizard are:
- Web
- Dictionary
- German to English Phrase Book
- English to German Phrase Book
- Spanish to English Phrase Book
- English to Spanish Phrase Book
- French to English Phrase Book
- English to French Phrase Book
- Italian to English Phrase Book
- English to Italian Phrase Book
- Encyclopedia
- Facts (Facts and Figures)
- Miscellaneous (Miscellaneous Info)
- Numbers (Useful Numbers)
- Maths
- Science
- Chemistry
- Physics
- Biology
- History
- Geography
- Anagrams

### smsWizard data structures

User inputs a character string C$.

C$ is pre-processed to the INPUT STRING I$ (see smsWizard String Input Processing).

There are a number of databases and each database consists of a number of entries, where each entry consists of two parts, an INDEX STRING X$ and an INFO STRING F$.

A matching process is used to find the first MATCH in the selected database or databases. A management task looks for other matches and if it finds any, records them in the system management log.

When matching, any \'s in the INDEX STRING are ignored. If the INFO STRING found by the MATCH starts with ^ then this string, with the initial ^ removed is treated as a user input string C$.

smsWizard incorporates a memory capability so that users can access additional information from a new structure by sending a single character. In order to keep a simple structure for the organisation of additional information, smsWizard incorporates the concept of a ROOT.

This is easy to understand from an example (also see Figure 3):
Note R$ is ROOT STRING, where R$ = R(1) ... R(T).
I$ = Henry 8 (note: K is length of Input String)
X$= Henry 8\ (\ indicates this is ROOT information)
MATCH found (as X(last) = \ set ROOT STRING = Henry 8\
F$ = Henry 8:
   1 Life
   2 King
   3 Wives
   4 Children
   5 other
   Send choice 1-5
next I$ = 3
As ROOT STRING set and K = 1; let S$ = R$&/&I$
   (where "&" represents string concatenation)
X$= Henry 8V3
MATCH found (Set R$ = S$)
F$ = Henry 8 wives:
   1 Catharine of Aragon
   2 Anne Boleyn
   3 Jane Seymour
   4 Anne of Cleves
   5 Catharine Howard
   6 Catharine Parr
   Send choice 1-6
**next** I$ = 2
As ROOT set & K = 1; let S$ = R$&/&I$
X$= Henry 8V3/2
MATCH found (Set R$ = S$)
F$ = Anne Boleyn:
   Born 1507
   Her early years were at the French court
   Mother of Elizabeth 1
   Executed 19 May 1536 so Henry could pursue his passion for Jane Seymour

### Flowchart Description

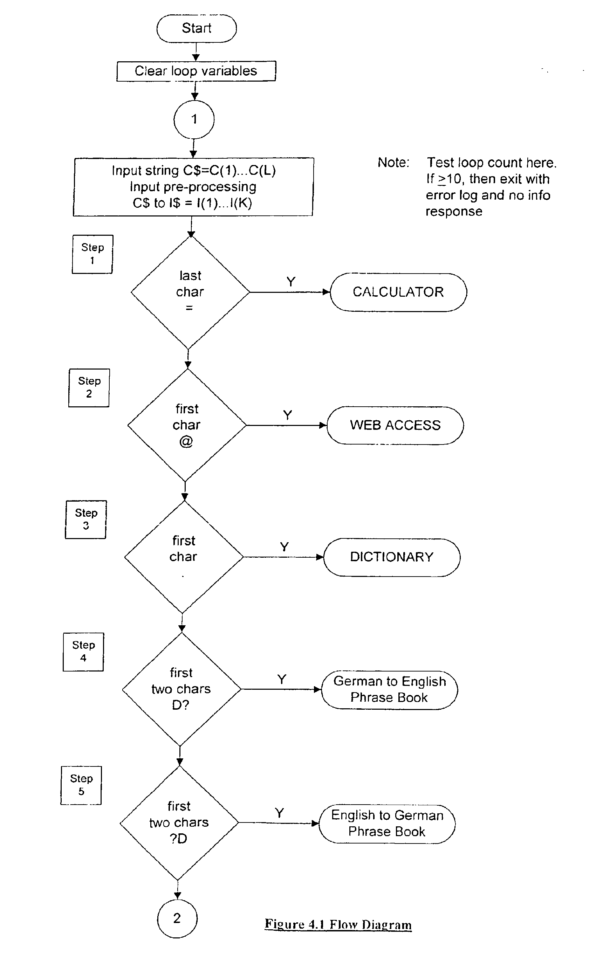

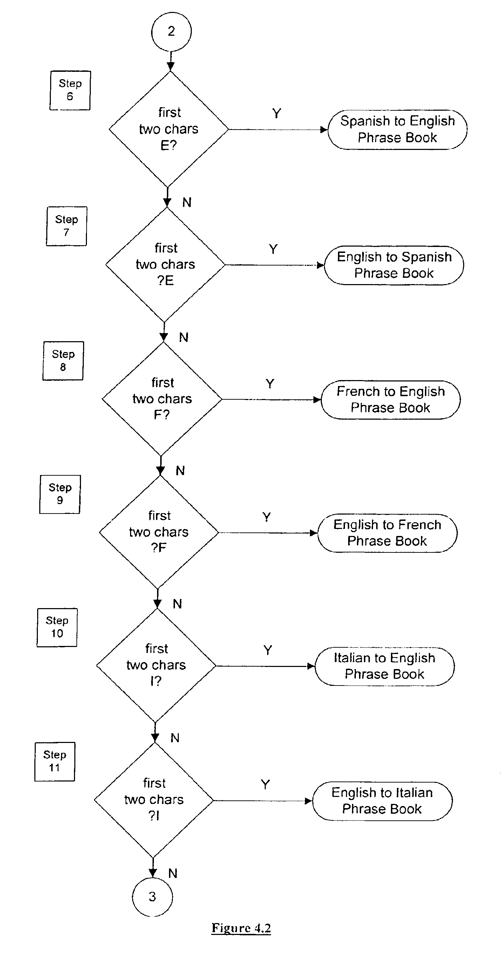

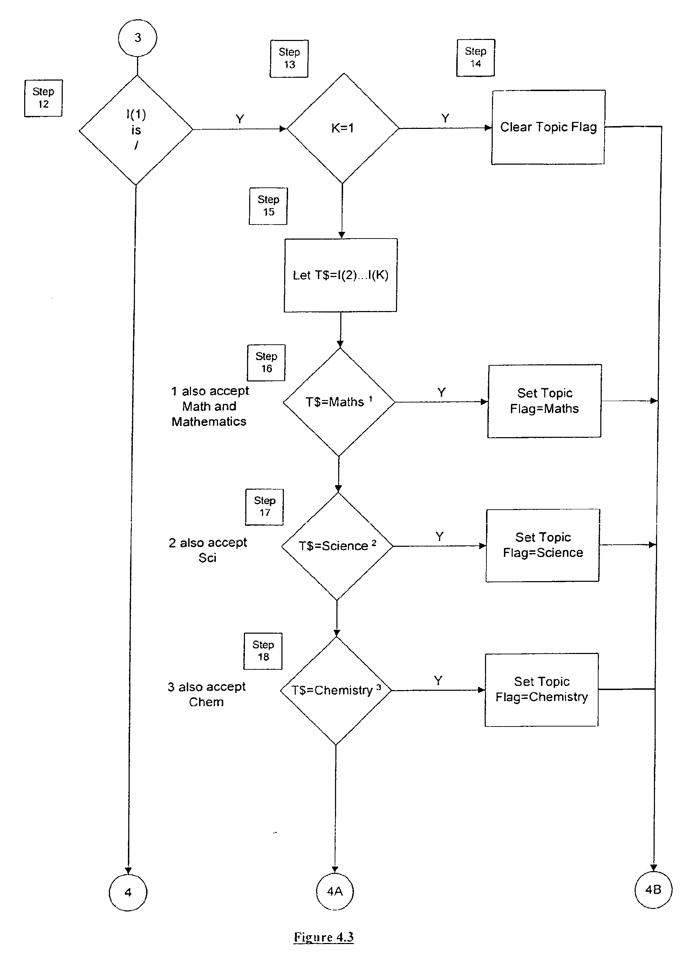

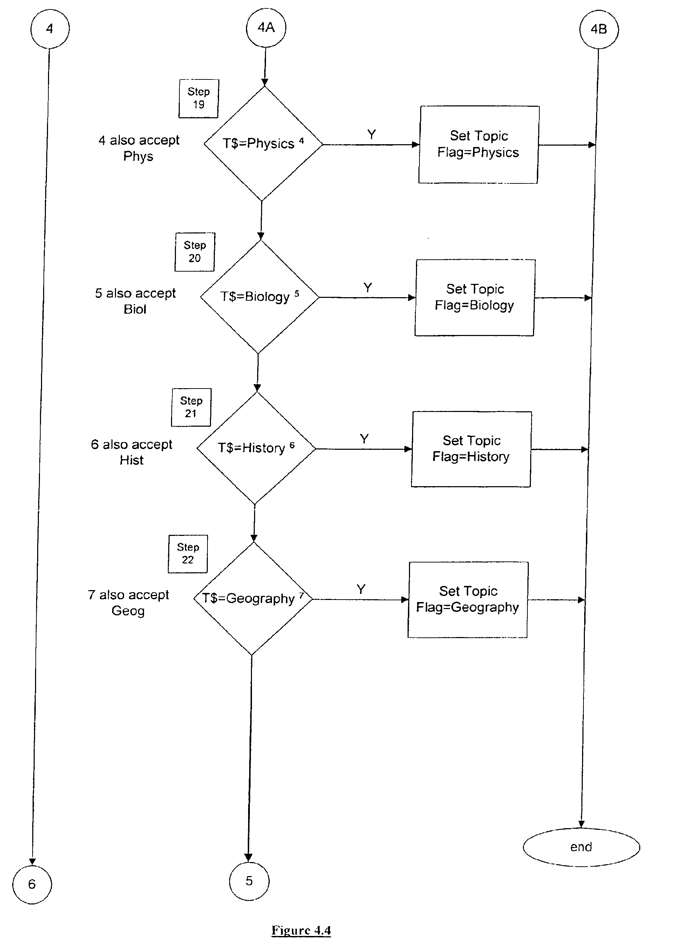

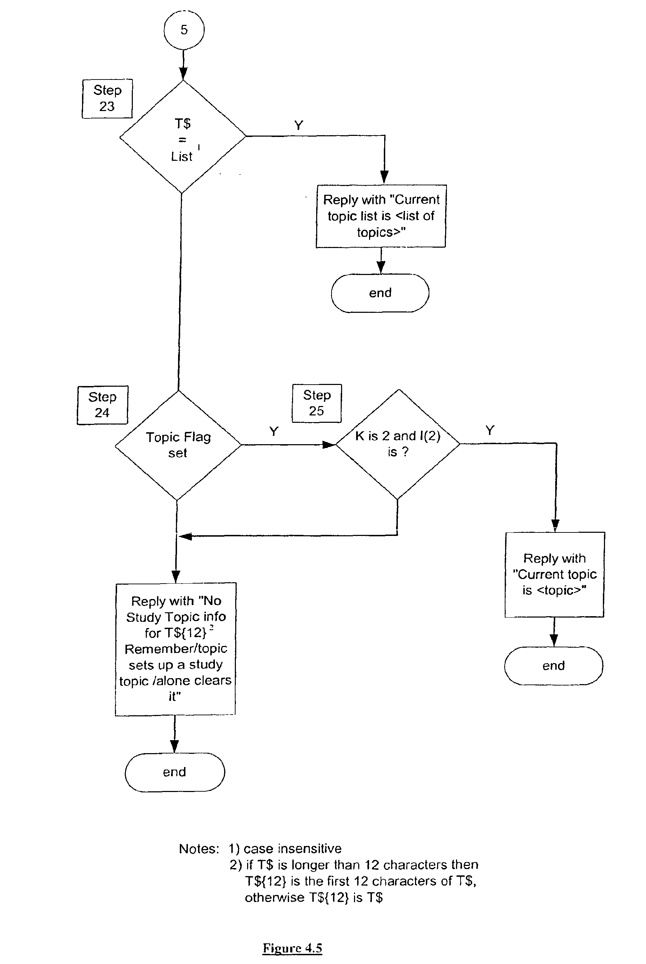

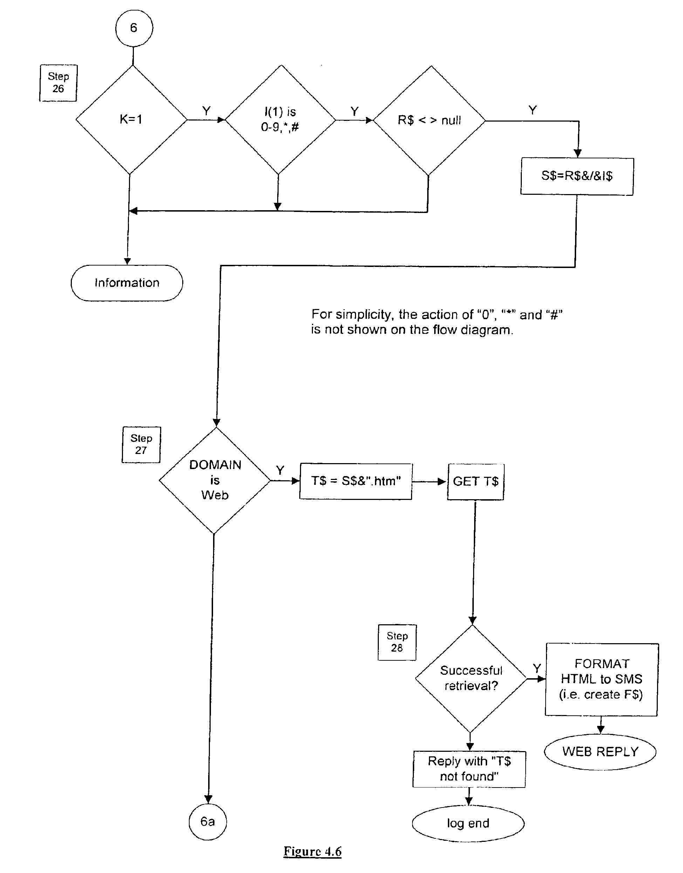

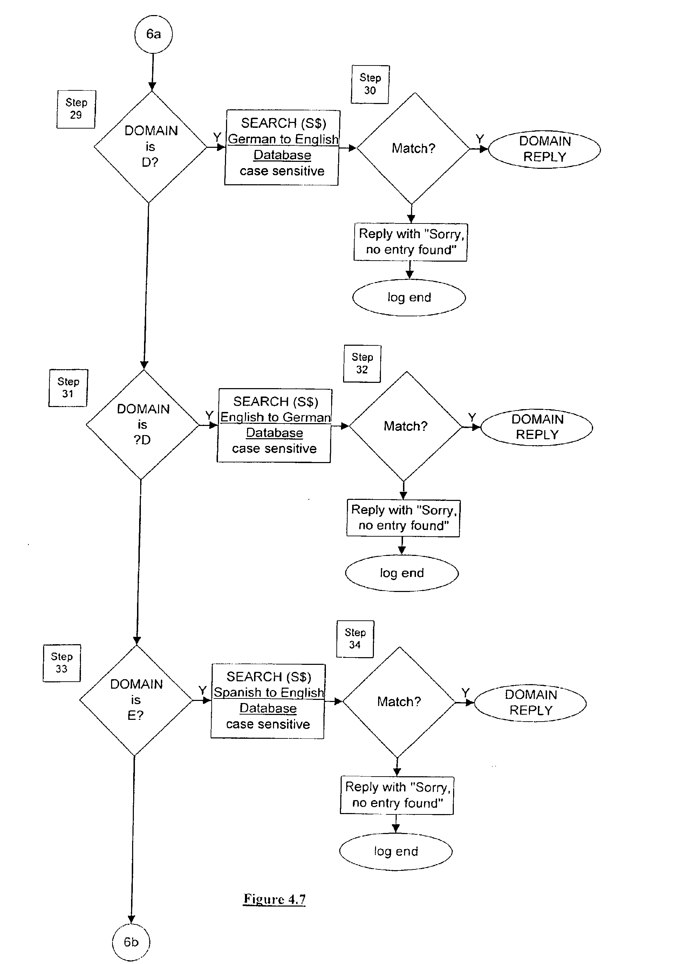

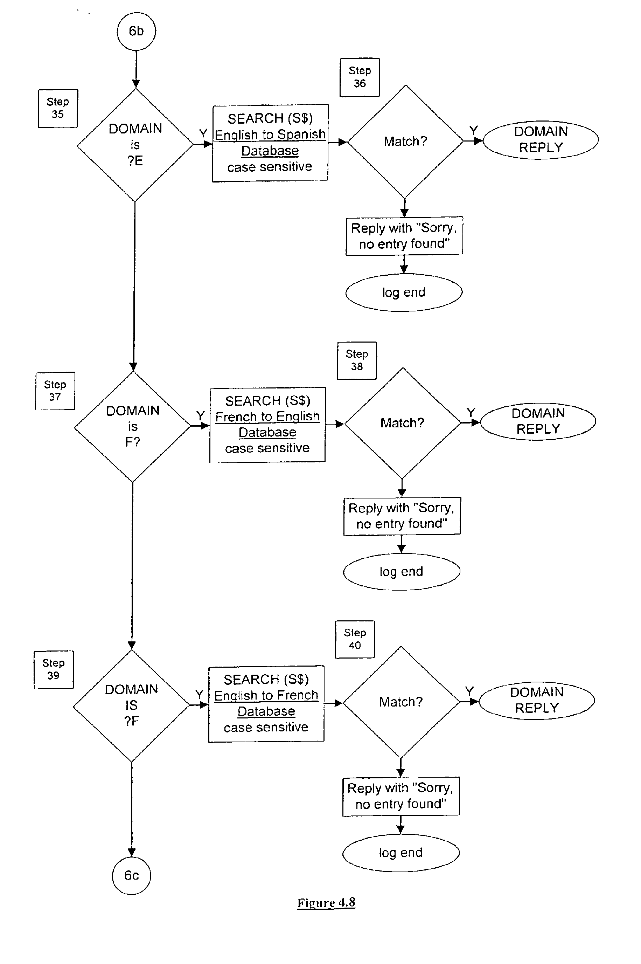

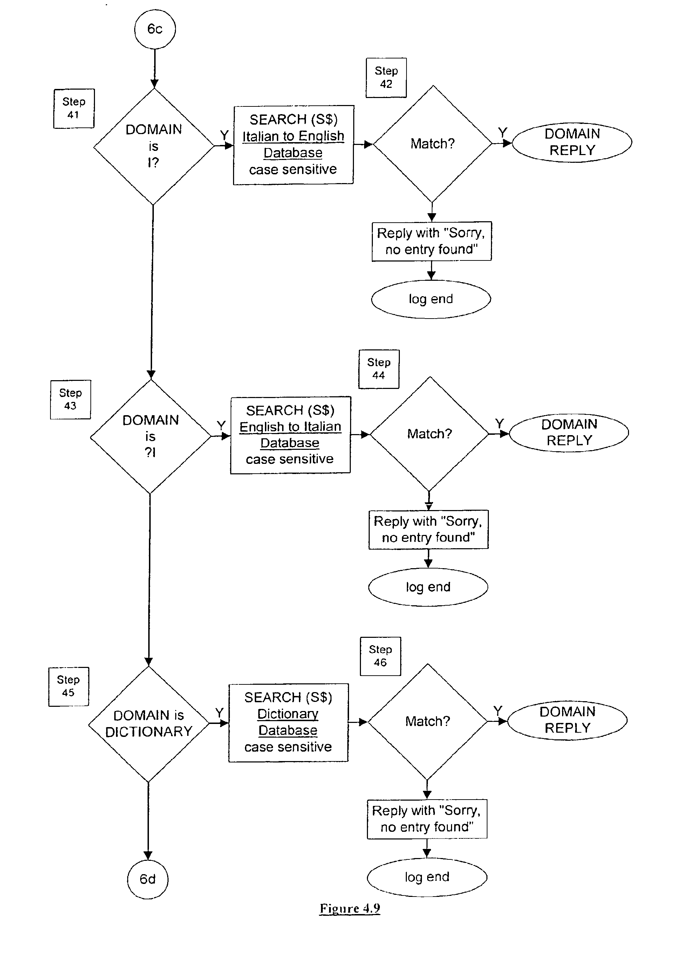

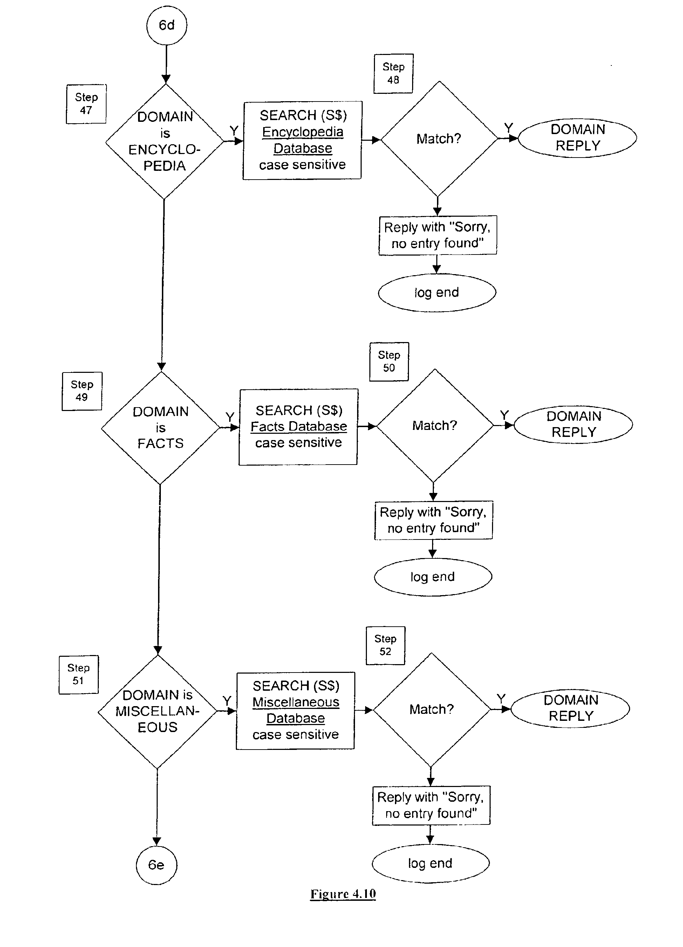

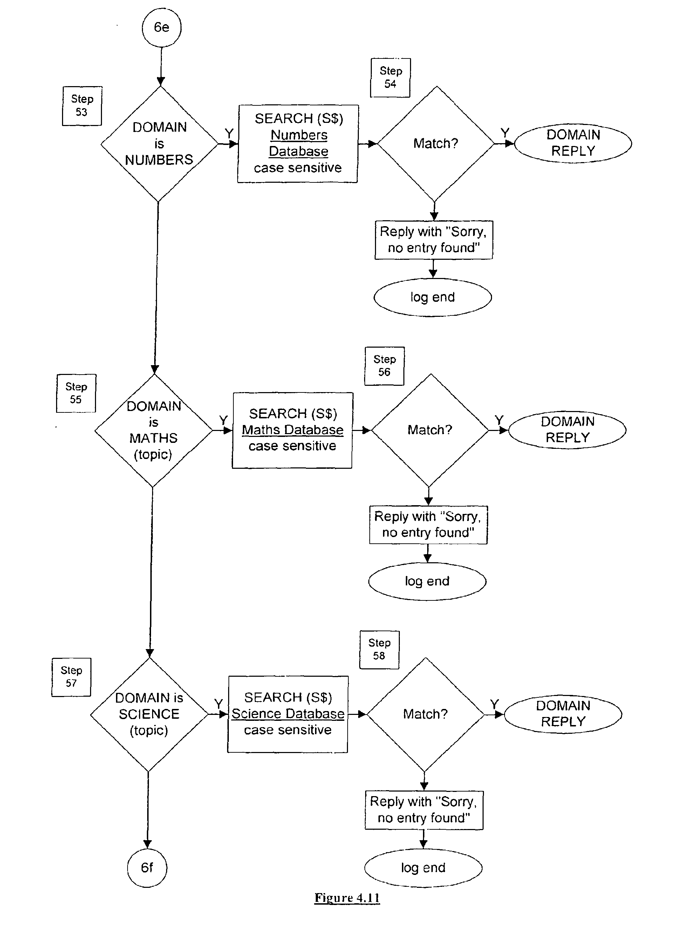

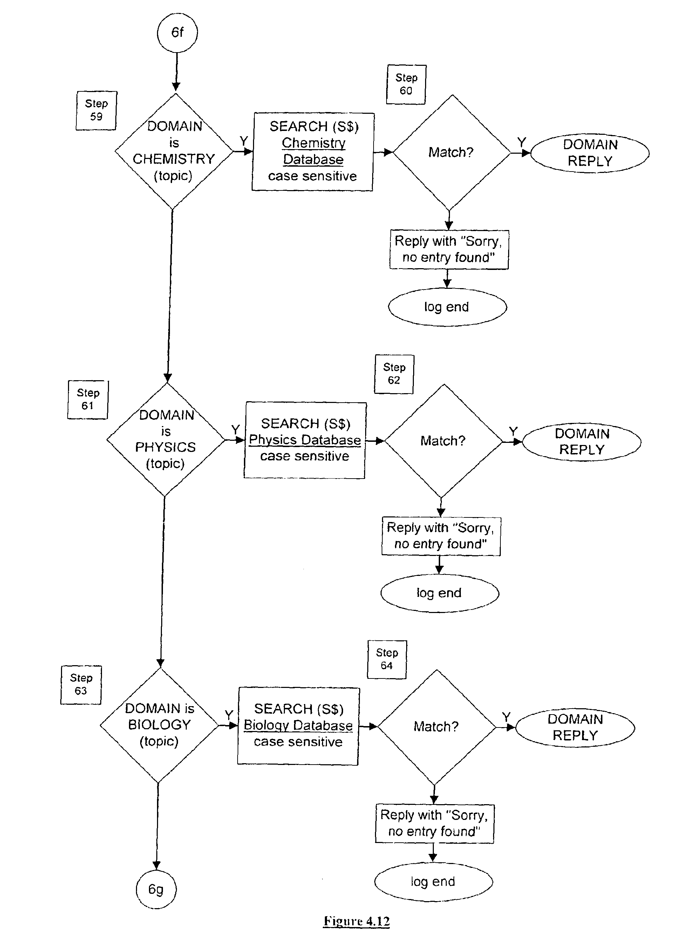

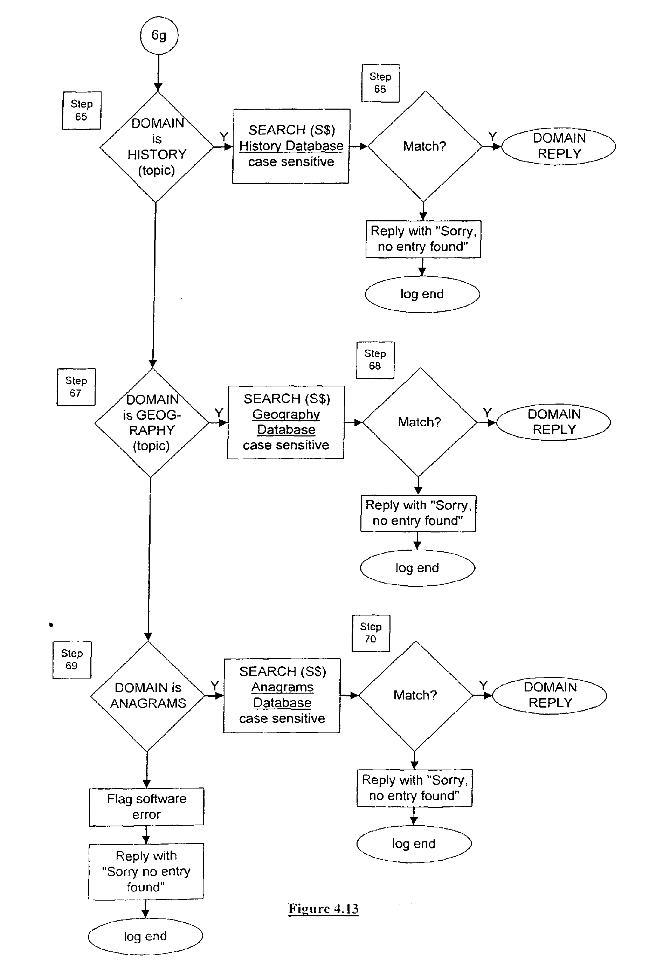

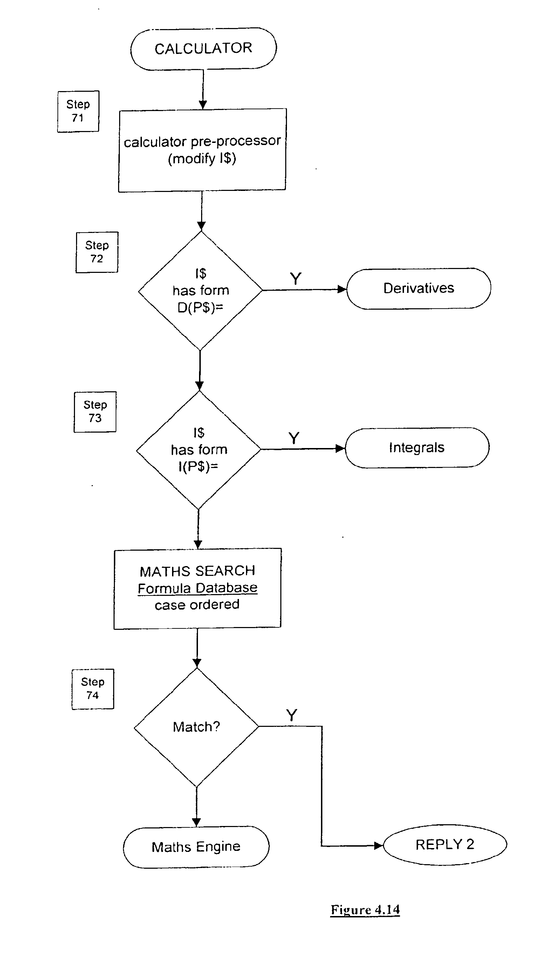

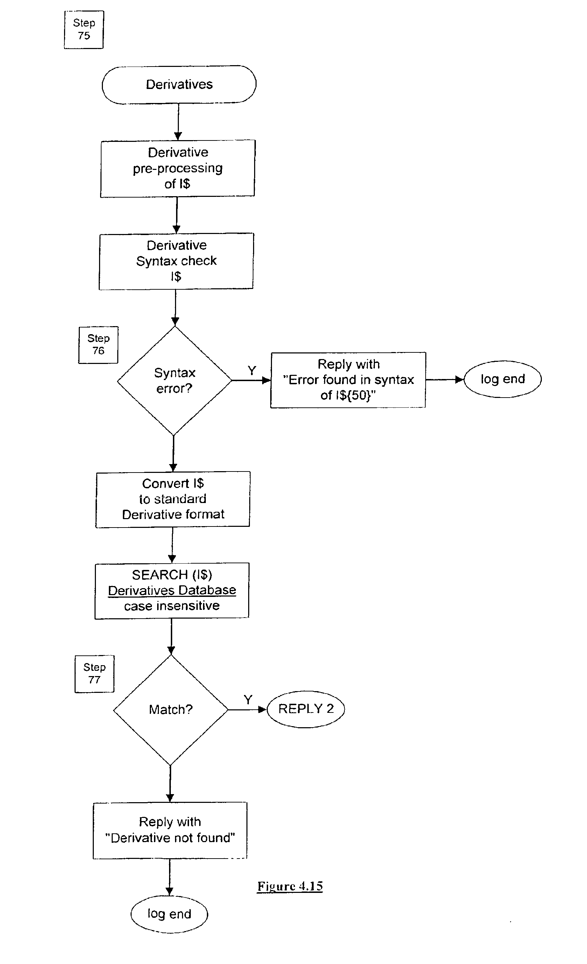

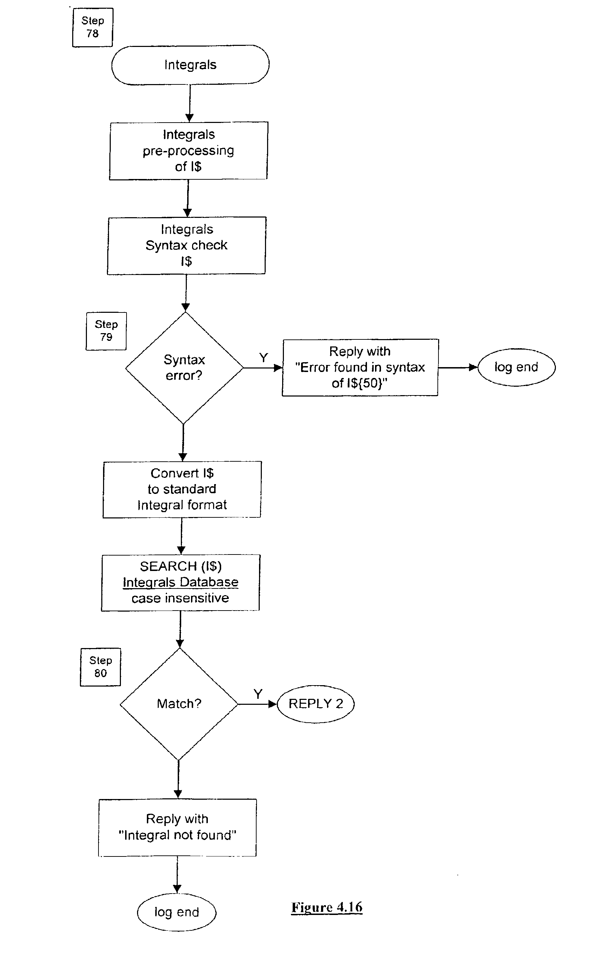

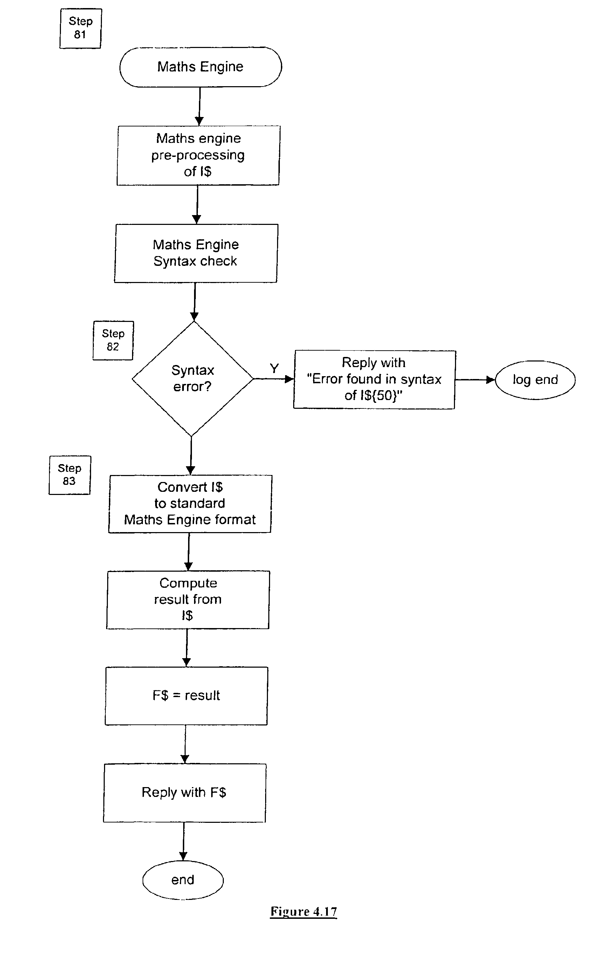

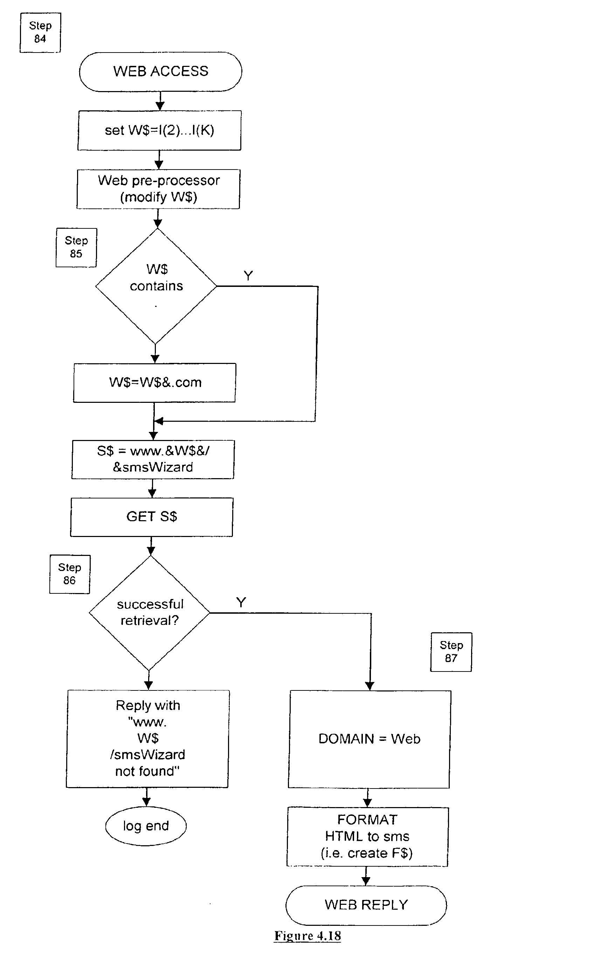

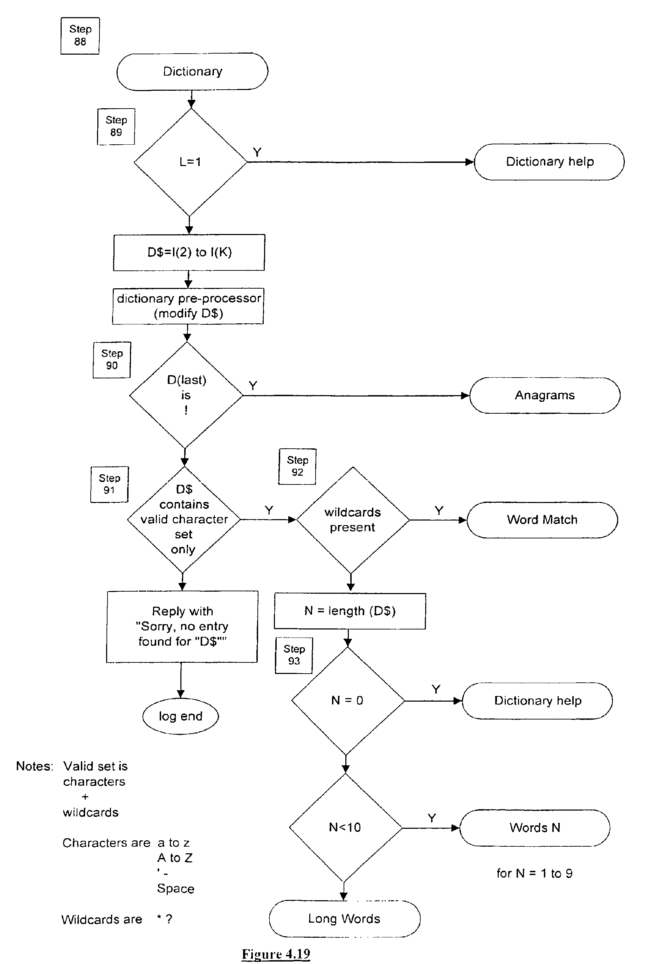

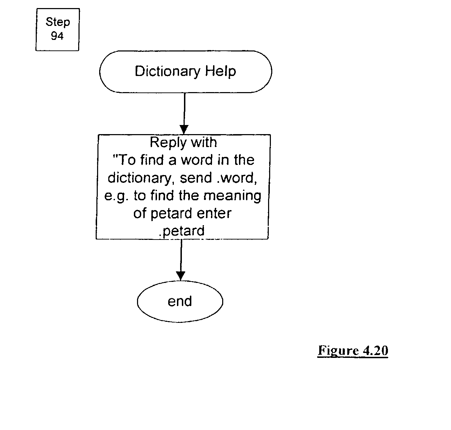

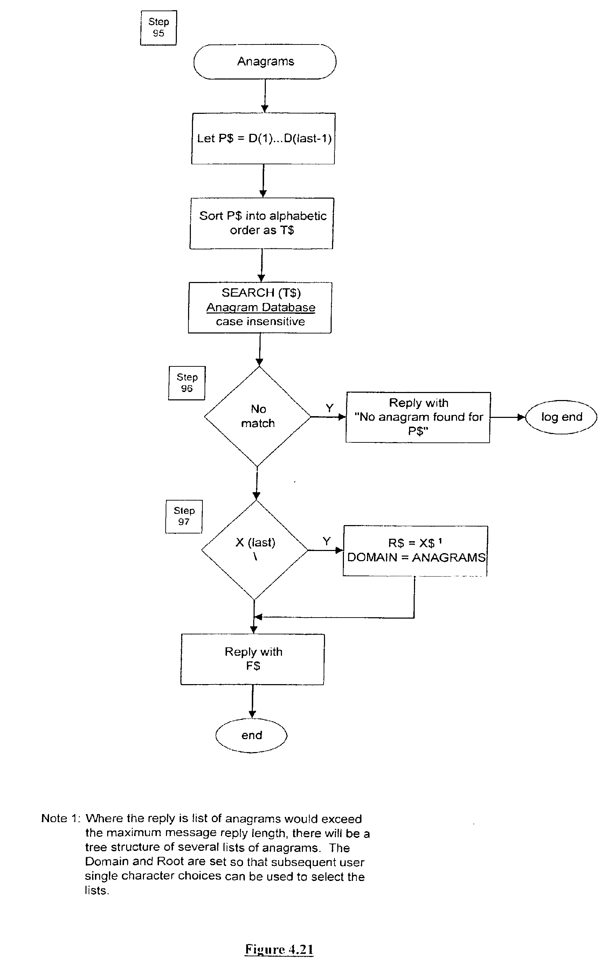

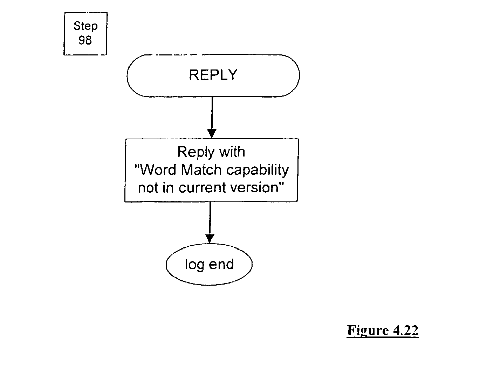

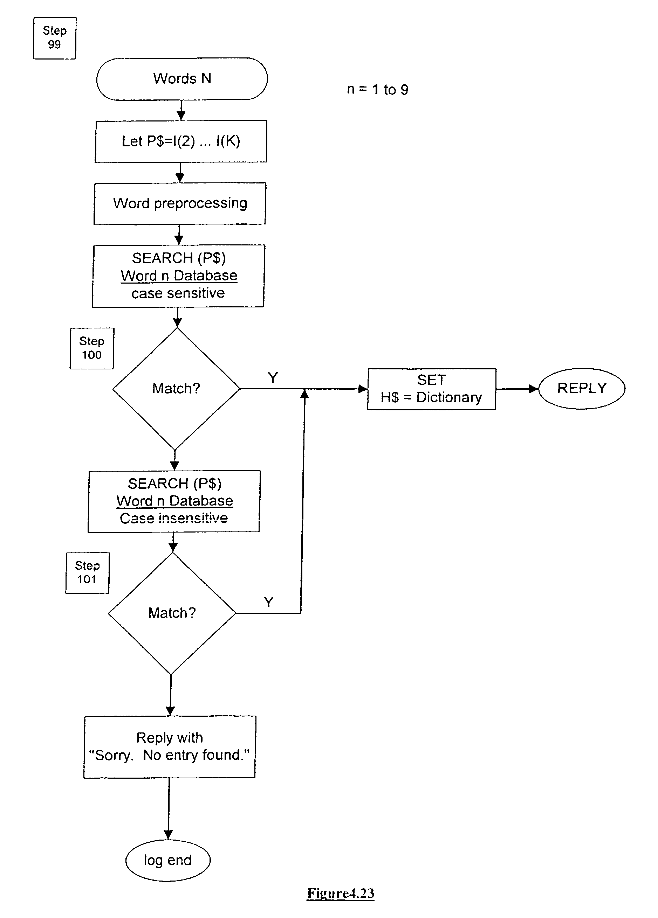

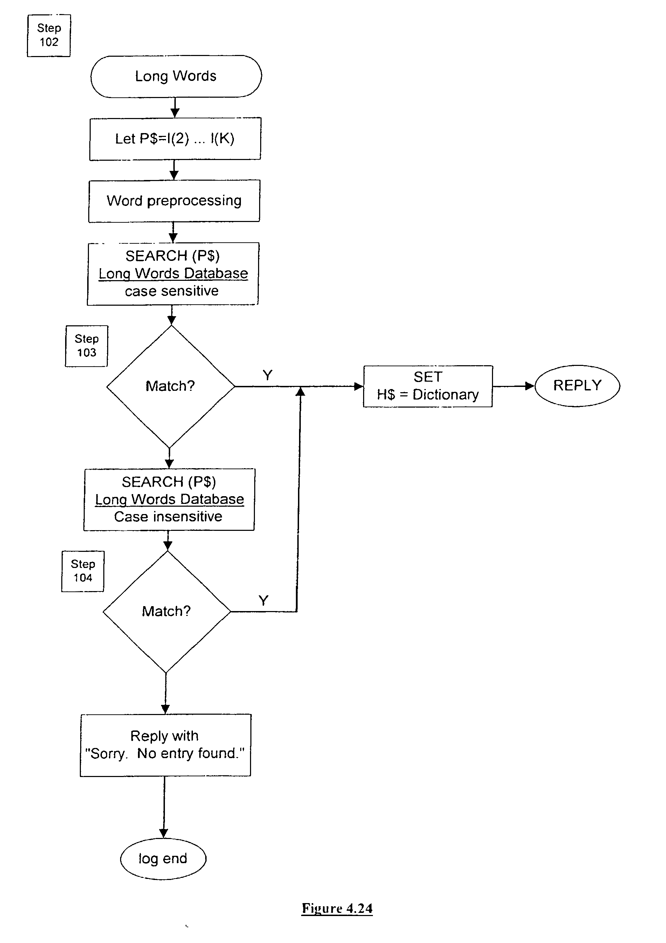

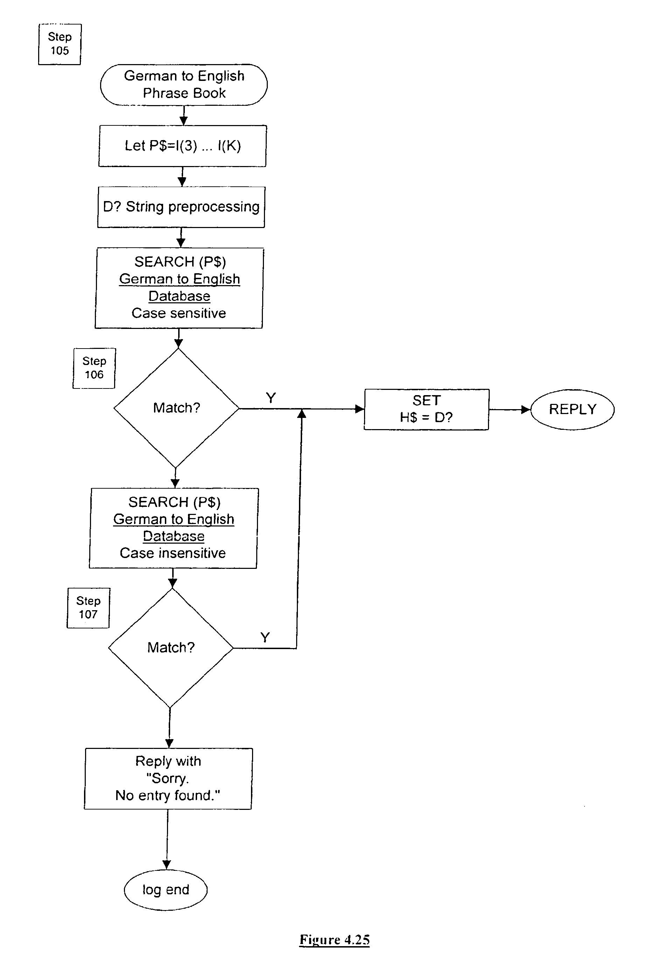

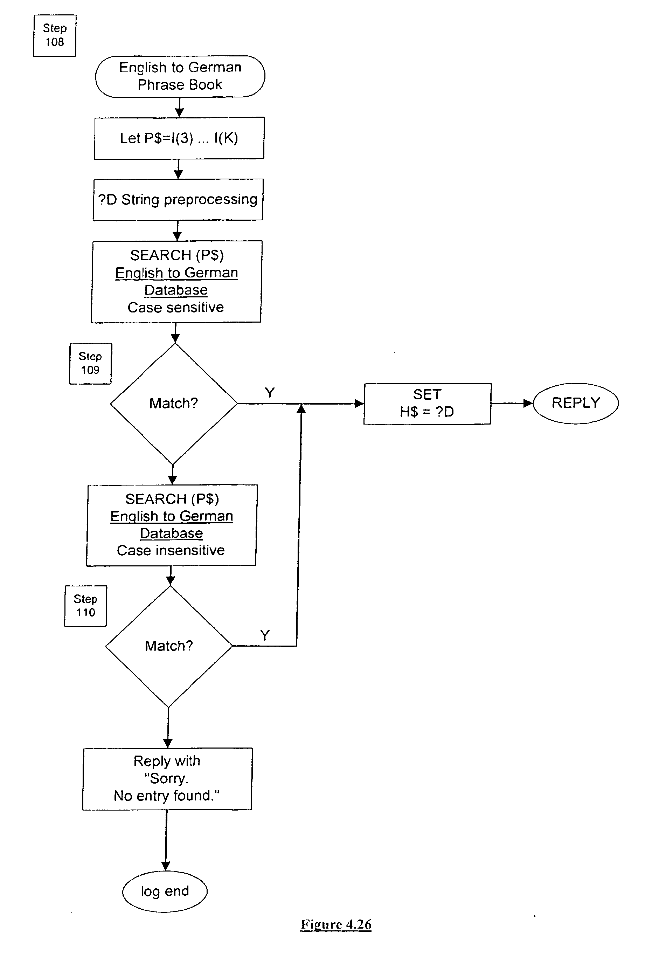

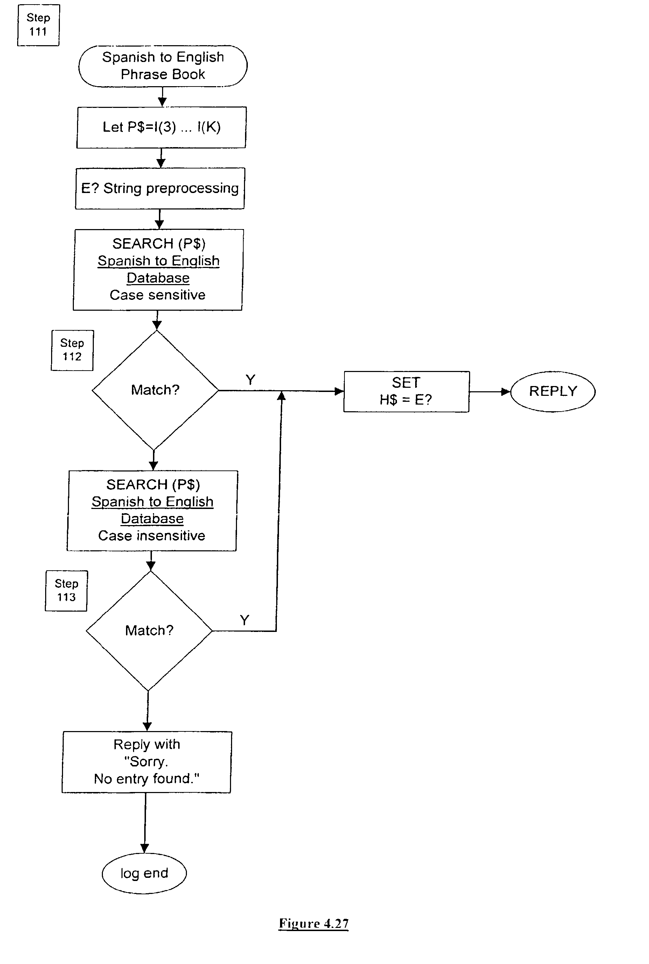

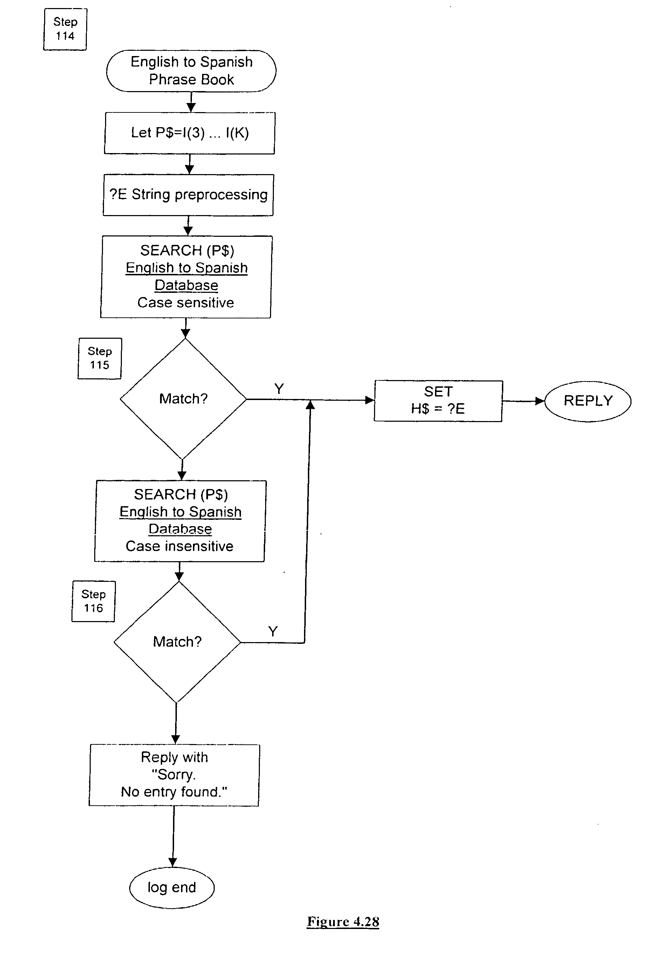

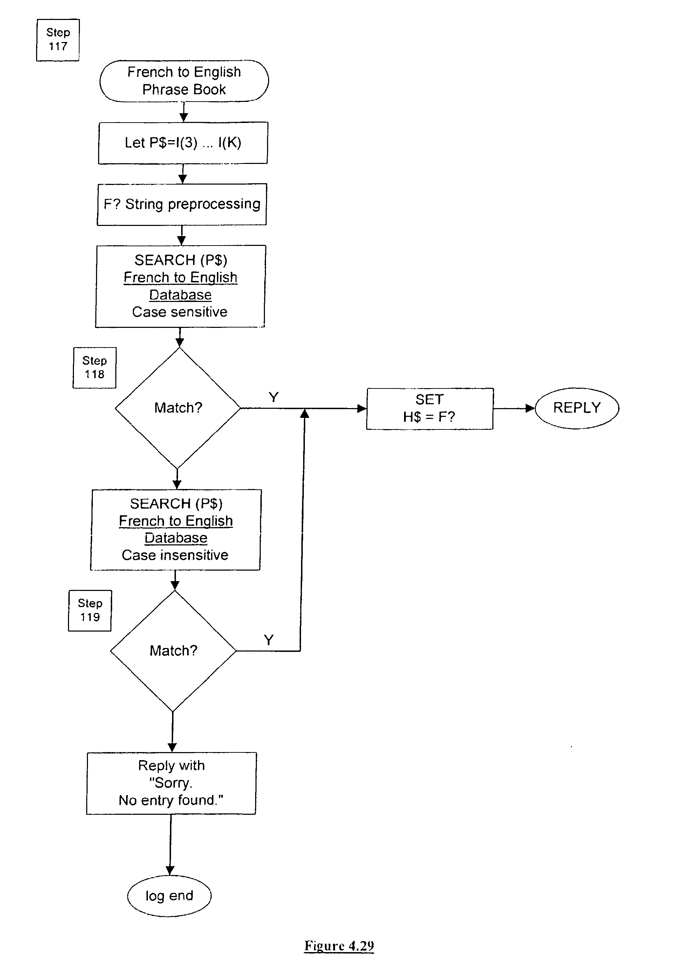

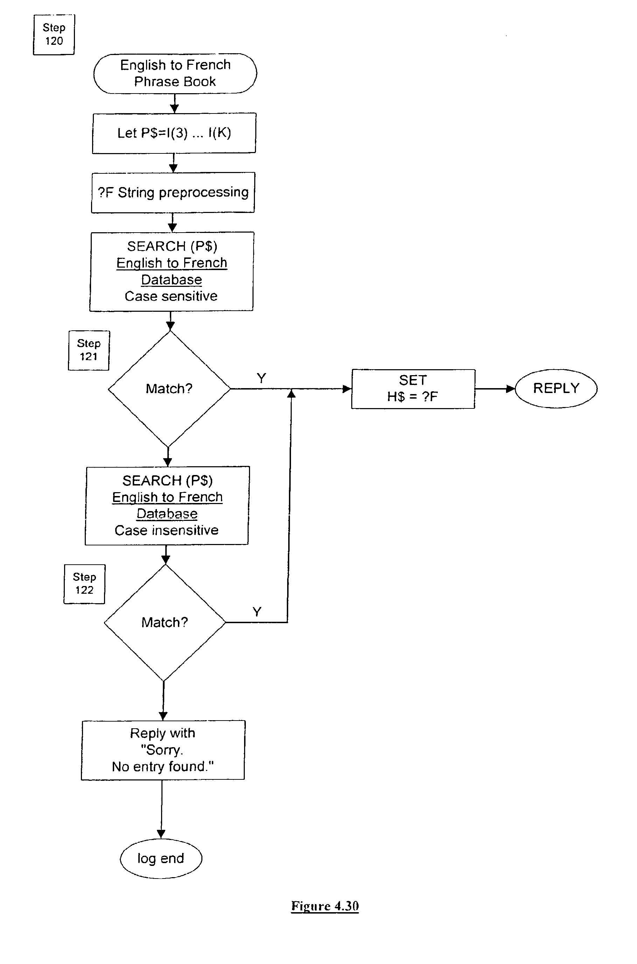

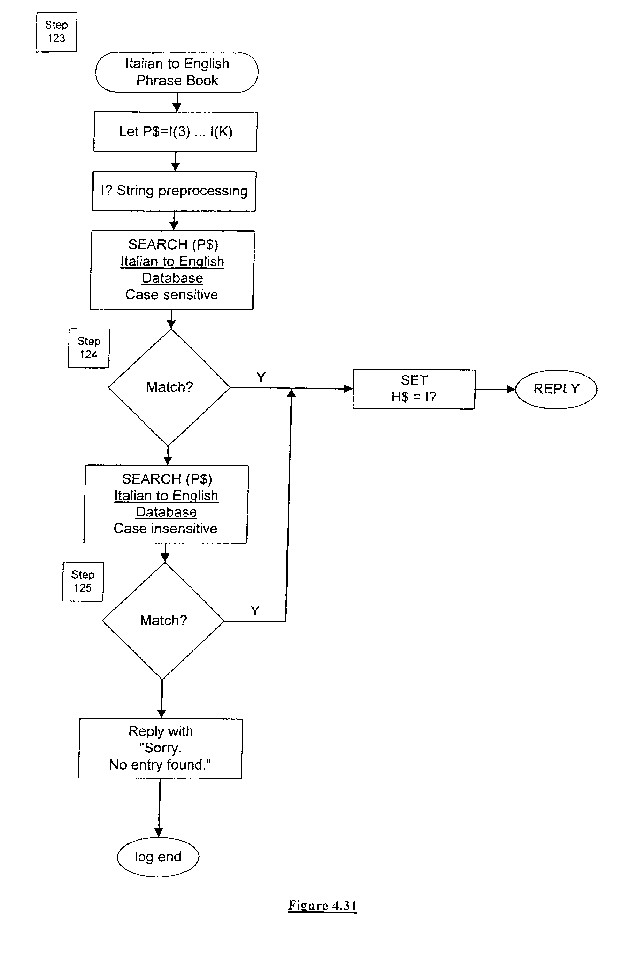

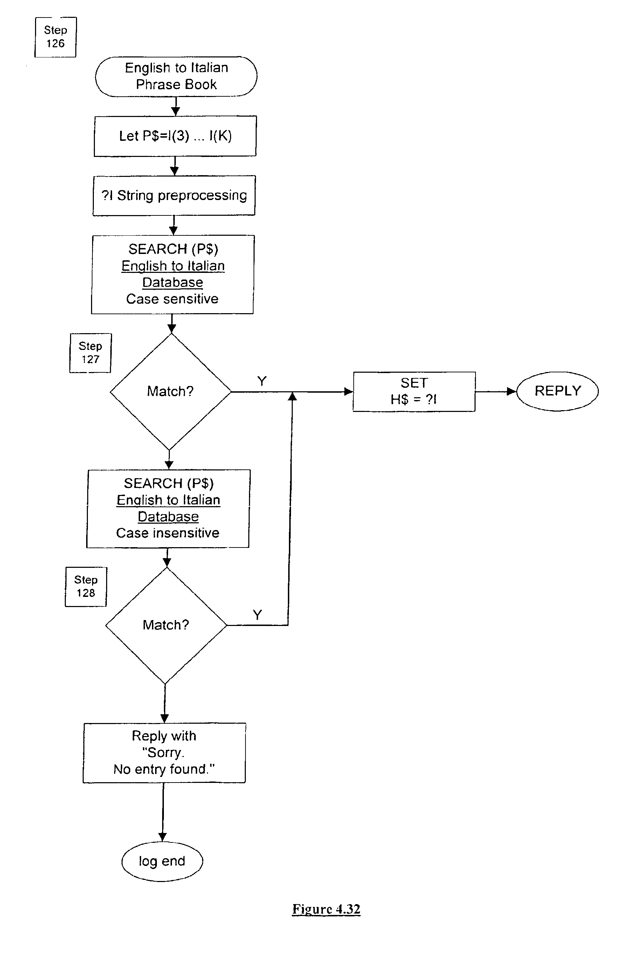

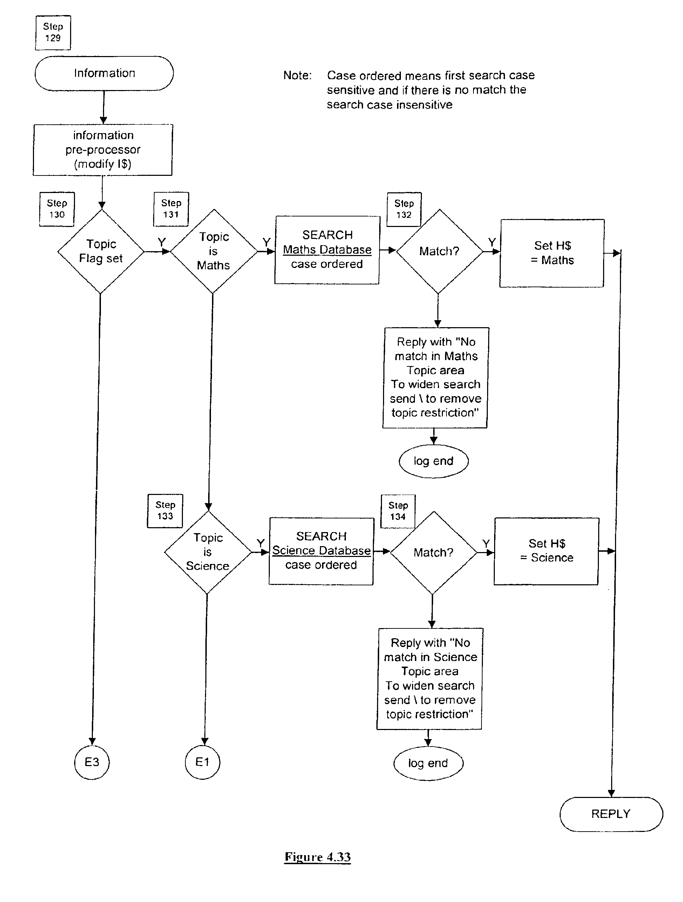

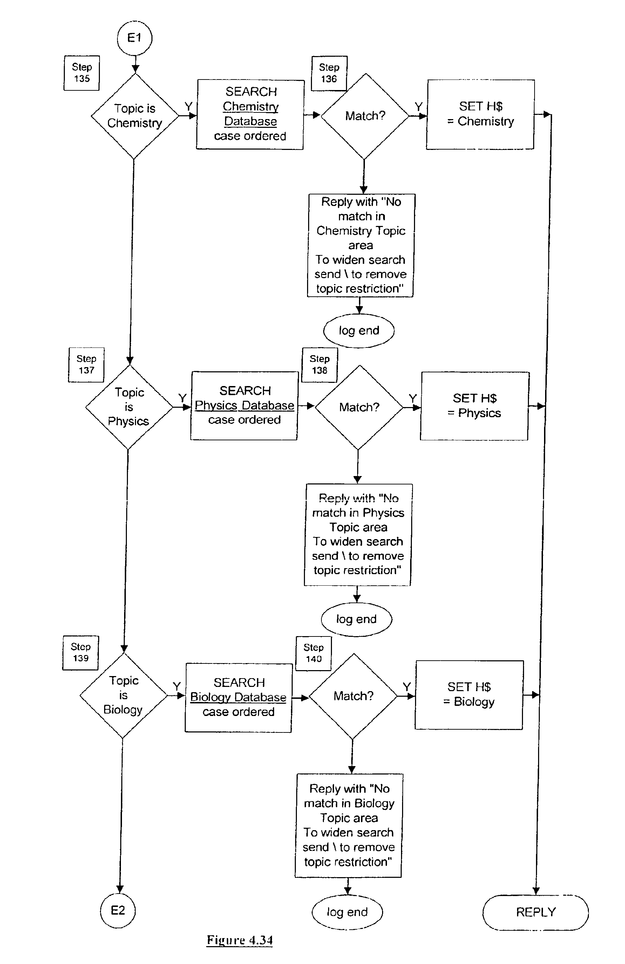

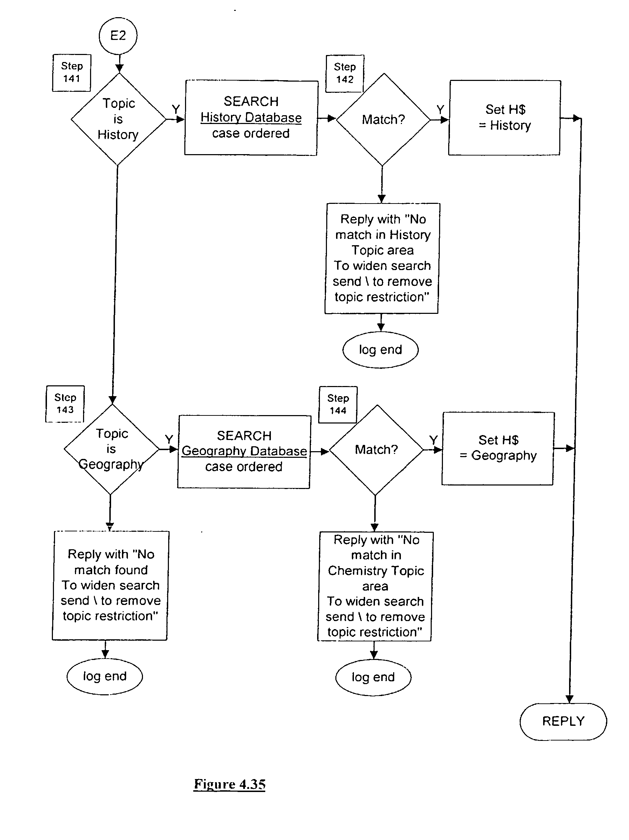

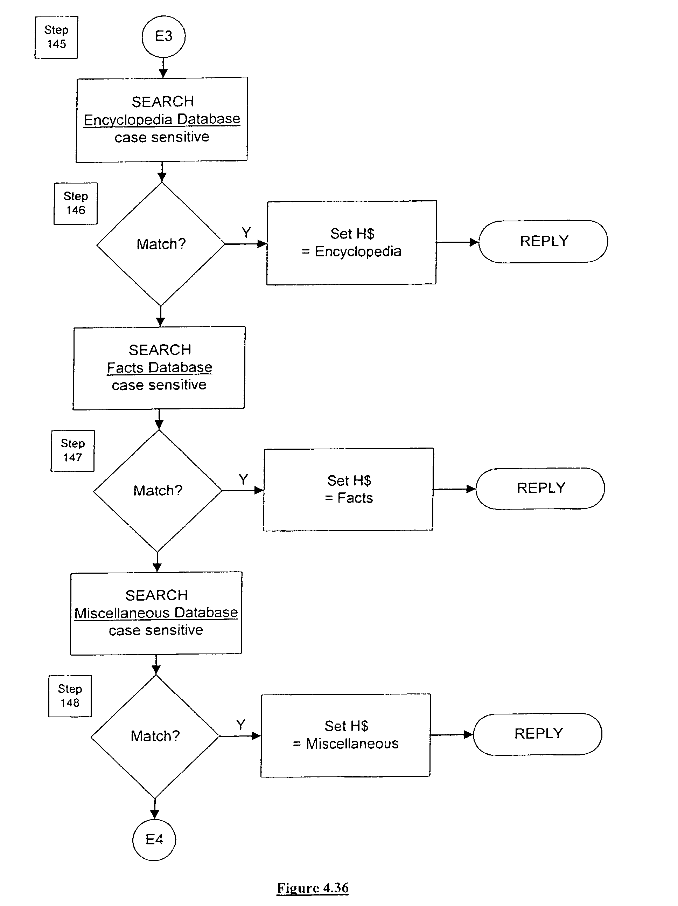

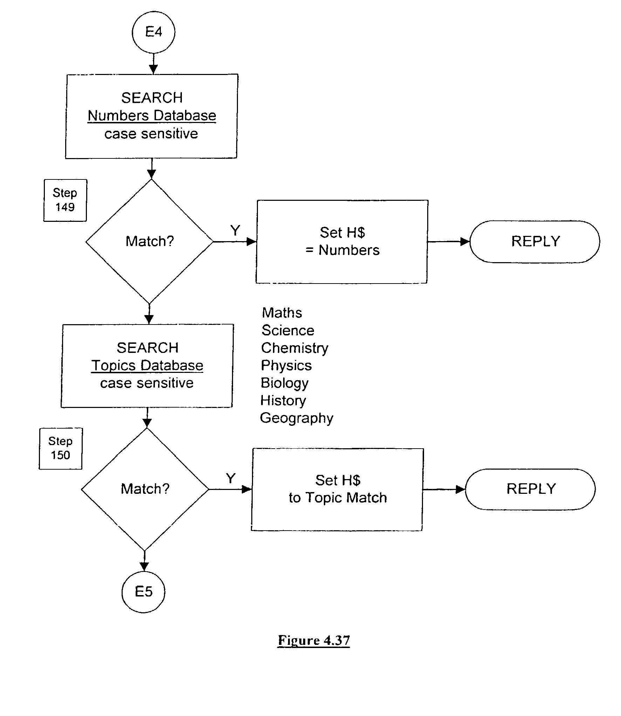

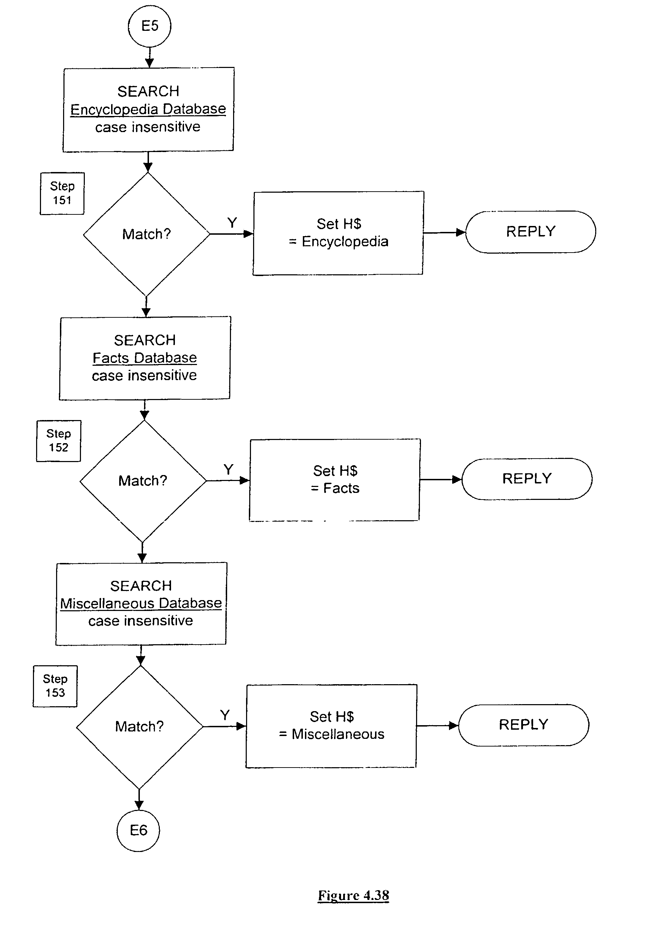

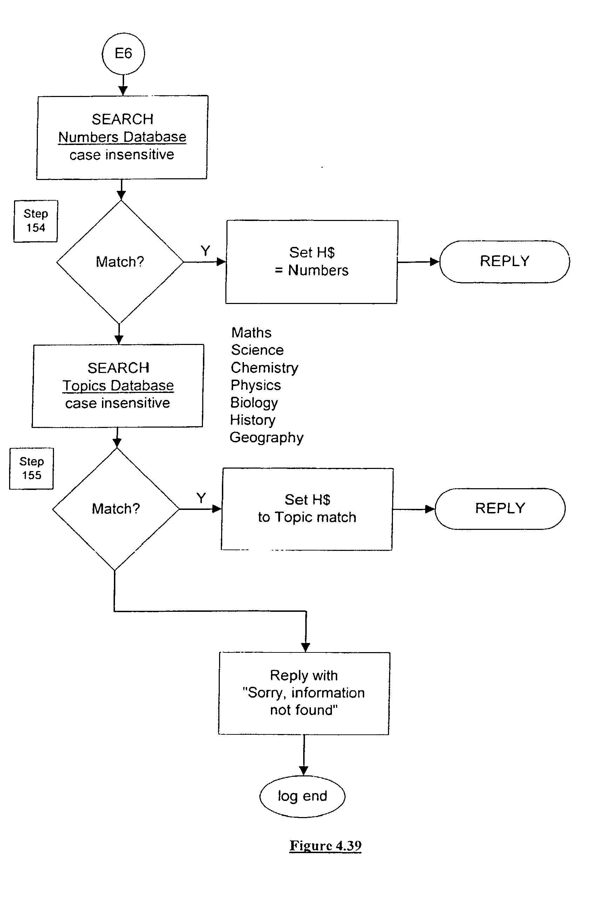

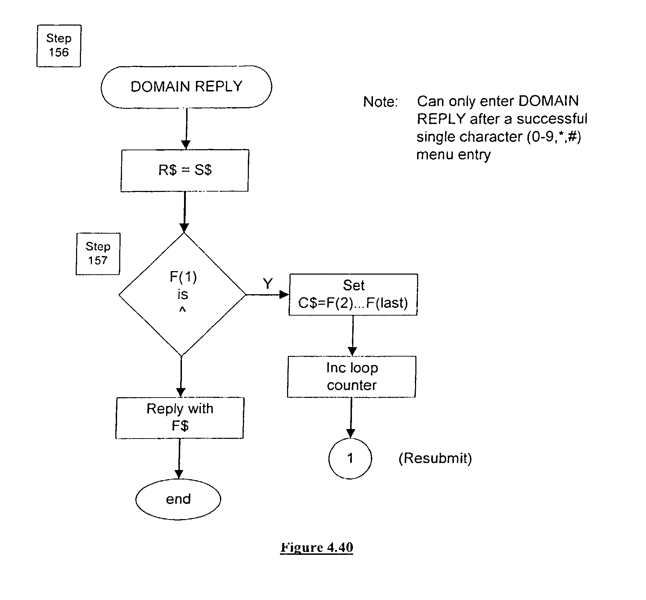

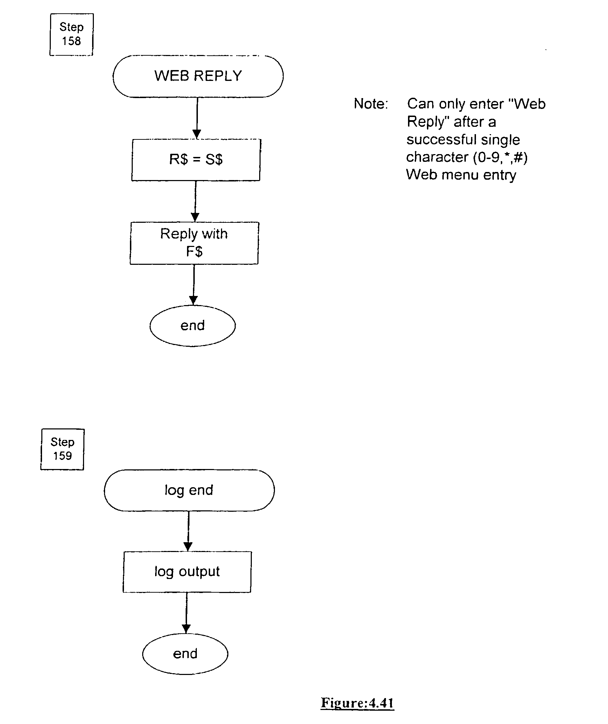

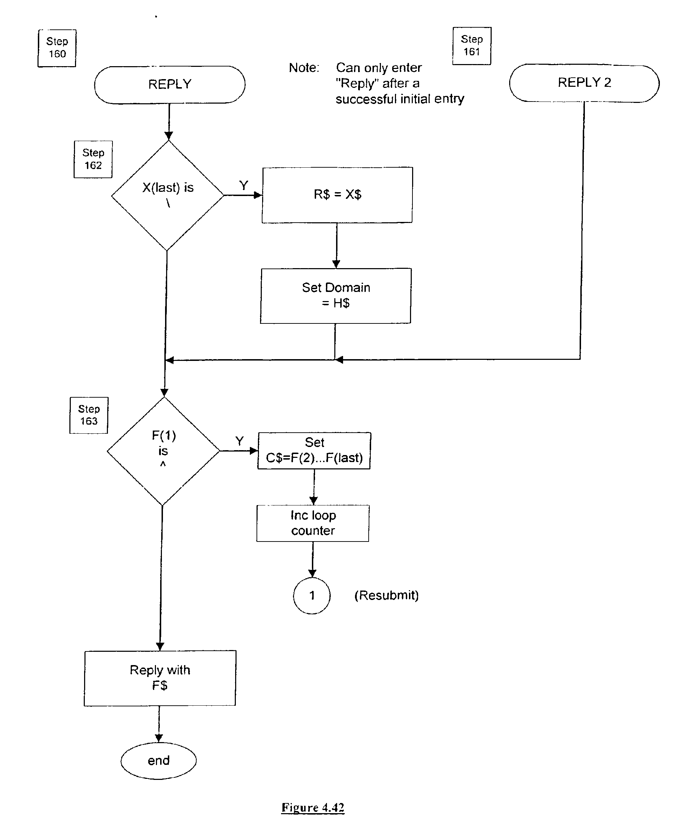

The flow chart in Figure 4 illustrates how the preferred embodiment may be implemented.

This description of the flowchart deals with it sequentially and covers:
- Initial conditions
- Pre-processing and loop control
- Prefixes and suffixes
- Topic control
- Choices
- Calculator
- Web access
- Dictionary
- Phrasebooks
- Information
- End Processing

It describes the flowchart in detail, the bracketed numbers refer to the steps on the flowchart. However, there are other ways in which the Preferred Embodiment could be implemented.

### Initial Conditions

Prior to the processing described in the flowchart; Root, Topic and Domain information for this user, accessible by the users mobile phone number (CLI), will have been retrieved from a memory store. The Root will be held in R$. The text of the users SMS message will be held in C$.

### Pre-Processing And Loop Control

There are two starting places for the main flowchart processing: the "Start" connector which clears loop variables ready for the first pass through the flowchart, and "connector 1" for subsequent passes. At "connector 1" (see the Note) there will be a check to prevent looping more than ten times through the flowchart.

The input C$, either the text of the users message or that derived by the flowchart for loop purposes, will be pre-processed: to convert all white space into spaces; to convert sequences of spaces to a single space; to remove leading and trailing spaces. There may be other forms of pre-processing, such as character set translation.

### Prefixes and Suffixes

The pre-processed input (I$) is then checked for a variety of suffixes and prefixes that are used to indicate particular ways of processing. The "=" suffix (S1) ((S1) = Step 1, (S2) = Step 2, (S3) = Step 3, and so on) indicating use of the "Calculator". The "@" prefix (S2) indicating a World Wide Web related request. The "." prefix (S3) requesting "Dictionary" access.

The next set of prefixes (S4,S5,S6,S7,S8,S9,S10,S11) request various language Phrase Books. The prefix is of the form "?" followed by a letter for English to the language specified by the letter; or, in the form letter followed by "?" for the language specified by the letter to English. The letters are: "D" for German, "F" for French, "S" for Spanish, or "I" for Italian. Other letters or letter groups may be used as language indicators. There is a check for the topic control prefix "/" (S12). If present there is a check on the length of the input (S13) to detect for input consisting solely of "/" that indicates that the Topic Flag be cleared (S14), see below for processing of "End" connector

### Topic control

For longer input starting with a "/", T$ is set to the text following the "/" (S 15). There may be other processing of T$, such as leading space removal. T$ is checked (S16,S17,S18,S19,S20,S21,S22) against the range of topic names in full form, abbreviations or alternatives ("Maths", "Math", "Mathematics", "Science", "Sci", "Chemistry", "Chem", "Physics", "Phys", "Biology", "Biol", "History", "Hist", "Geography", "Geog"), if there is a match the Topic Flag is set for the corresponding Topic, see below for processing of "End" connector.

If T$ is "list" with letter of any case (S23) then a reply is sent to the user with the list of topics currently available, see below for processing of "End" connector.

If there is a topic currently set (S24) and the input I$ was simply "/=" (S25) then a reply is sent to the user with the current topic setting and processing ends; otherwise a reply with a help about topics is sent to the user, see below "End processing" of "Log End".

### Choices

This part of the flowchart deals with the single character user input that represent the choices made from the current Domain and Root.

The length of the input is checked (S26). If the input is not a single character, or the character is not 0 to 9, a "*", or a "#", or there is no Root then processing jumps to the Information section, see below.

If the input is a single character, 0 to 9, a "*", or a "#" and there is a Root, then S$ the Temporary Root String is set to the concatenation of the Root, a "/" and the input character. Suppose R$ was "Mercury\" and the input was "2" then S$ will be "MercuryV2". The implementation of "0", "*" and "#" functionality is not shown. It could be inserted at this point, and a Root history could be useful to help provide this functionality.

There are then a series of decisions as to which Domain this Root and choice is associated with.

If the Domain is Web (S27) then T$ is made into an HTML Web page reference by concatenating the ".htm" suffix. The Web is accessed to get the page represented by T$. If the page is successfully retrieved (S28) then the content of the page is processed into a format suitable for SMS and stored in F$, see below "End processing" for "Web Reply" (S158). If the web page is not successfully retrieved then a suitable message is sent to the user, see below for "End processing" of "Log End".

If the Domain is one of the Phrasebooks (S29,S31,S33,S35,S37,S39,S41,S43), or Dictionary (S45), or Encyclopedia (S47), or Facts (S49), or Miscellaneous (S51), or Numbers (S53), or one of the topics (Maths, Science, Chemistry, Physics, Biology, History, Geography) (S55,S57,S59,S61,S63,S65,S67), or the Domain is Anagrams (S69) then S$ is used as an index to do a case sensitive search of the relevant Database. If there is a match (S30,S32,S34,S36,S38,S40,S42,S44,S46, S48,S50,S52,S54,S56,S58,S60,S62,S64,S66,S68) the result will be in F$, see below "End processing" of "Domain Reply" (S156). If there is no match then the user is sent a not found message, see below "End processing" of "Log End".

If the Domain is not found at the end of the decision tree (S69) then the system flags an internal software error (as it should not be possible for Root to be set without a valid Domain), the user is sent a not found message, see below "End processing" of "Log End".

### Calculator

The input in I$ is pre-processed into a suitable form for the Calculator, such as removing embedded spaces. If the input is recognised to be in the format for a Derivative request (S72) then processing continues at "Derivatives" (S75), similarly if the format is that of an Integral request (S73) processing at "Integrals" (S78).

Otherwise the input is used to do a case ordered (initially case sensitive followed by case insensitive if there is no match) search of the Formula Database. If there is a match found (S74) the result will be in F$, see below for "End processing" of "Reply 2" (S161). If there is no match processing continues with the "Maths Engine" (S81).

At "Derivatives" (S75) the input is pre-processed and syntax checked. If there is a syntax error (S76) then the user is send a syntax error reply, see below "End processing" of "Log End". Otherwise the input is converted to a standard format for Derivatives and the input is used as an index to do a case insensitive search of the Derivatives Database.

If there is a match in the Database the result will be in F$, see below "End processing" of "Reply 2" (S161). Otherwise the user is sent a not found message, see below "End processing" of "Log end".

The processing for "Integrals" (S78) is similar to "Derivatives".

At "Maths Engine" (S81) the input is pre-processed and syntax checked. If there is a syntax error (S82) then the user is send a syntax error reply, see below "End processing" of "Log End". Otherwise the input is converted to a standard format for Maths Engine and a computation is made on I$ and the result put in F$, the user is sent F$ as a message, see below "End processing".

### Web Access

For initial Web Access (S84), W$ is set to all the characters in the input after the "@" symbol, and W$ is pre-processed ready for the web. If W$ contains a "." (S85) it is assumed to already have the necessary web suffix (e.g..co.uk), otherwise ".com" is appended. S$ is constructed from "www." followed by the content of W$ followed by "/smsWizard". For example if I$ was "@Telsis" then S$ would be "www.Telsis.com/smsWizard".

It would be possible to generalise this process to include web addresses which did not start with "www.".

The Web is accessed with the URL S$. If a page is successfully retrieved (S86) the Domain is set to "Web" and the content of the page is processed into a format suitable for SMS and stored in F$, see below "End processing" for "Web Reply" (S158). If the web page is not successfully retrieved then a suitable message is sent to the user, see below for "End processing" of "Log End".

### Dictionary

The Dictionary stage looks for a single "." to indicate a help request, a terminating "!" to indicate an initial anagram request. Dictionary searches are directed to different places according to word length for efficient and practical structure of the data for a large dictionary. Other techniques are possible.

The Dictionary (S88) is reached after a "." prefix has been found. If the input is a lone "." (S89) then processing continues at "Dictionary Help".

D$ is set to the characters after the "." and pre-processed (e.g. to remove leading spaces). If there is a trailing "!" on D$ (S90) processing continues at "Anagrams".

A check is made that D$ contains only valid characters (S91) for the dictionary (e.g. no brackets), if so, D$ is checked to see if it contains wildcard characters such as * or ? (S92), if so processing continues at "Word Match". A ? indicates a single unknown character and * indicates one or more unknown characters.

If there are no wildcards present (S92) then the length of D$ is put in N, for words of less than ten characters processing continues at a point specific to the length of the word, shown on the flowchart as "Words N", otherwise processing continues at "Long Words".

If D$ contains non-valid characters (S91) the user is sent a no entry message, see below "End processing" of "Log End".

At "Dictionary Help" (S94) the user is sent a dictionary help message, see below for "End processing".

At "Anagrams" (S95) P$ is set to D$ without the trailing "!". The characters within P$ are sorted into alphabetic order into T$, regardless of case. Therefore if D$ contained "pot!" then T$ will be "opt", and if D$ contained "PTO!" then T$ will be "OPT", thus anagrams are reduced to a common representation.

T$ is used to do a case insensitive search of the Anagram Database. If there is no match (S96) then the user is sent a no anagram found message, see "End processing" for "Log End".

If a match is found then the results will be in F$ and the matched database index entry will be in X$. Some words may have too many anagrams to fit in a single message, in this case the result is in the form of a choice tree based on using Domain and Root.

If the last character of X$ is "\" (S97) this indicates that the result is a choice tree. The Root R$ is set to X$ and the Domain is set to "Anagrams".

Regardless of the last character of X$, the user is sent F$ as a reply, see "End processing".

At "Word Match" (S98) the user is sent a message indicating that this capability is not in the current version, see below "End processing" for "Log End".

At "Words N" (S99) P$ is set to the characters after the "." in I$ and pre-processed, e.g. leading space removal. P$ is used to do a case sensitive search of the Word Database for the word length indicated by N. If there is no match (S100) a case insensitive search is done.

If there is a match (S100,S101) the result will be in F$ and the matched index entry will be in X$. The result could potentially be a choice tree that would require the Domain to be set. So, if there is a match H$ is set to "Dictionary" the potential new Domain value. The decision as to whether to set the Domain or not is in the "End processing" for "Reply" (S160) (S160).

If there is no match from the case insensitive search (S 101) the user is sent a not found message, see "End processing" for "Log end".

At "Long Words" (S102) processing is similar in method to "Words N" (S99) except that the Long Words database is used.

### Phrase Books

At the "German to English Phrase Book" (S105) P$ is set to the characters in I$ after the two character Phrase Book prefix. Phrase Book specific pre-processing is done on P$, for instance to convert accented characters to a standard format.

P$ is used to do a case sensitive search of the German to English Database. If there is no match (S106) a case insensitive search is done.

If there is a match (S106,S107) the result will be in F$ and the matched index entry will be in X$. The result could potentially be a choice tree that would require the Domain to be set. So, if there is a match H$ is set to indicate the German to English Phrase Book (the potential new Domain value). The decision as to whether to set the Domain or not is in the "End processing" for "Reply" (S160) (S160).

If there is no match from the case insensitive search (S107) the user is sent a not found message, see "End processing" for "Log end".

All the other Phrase Books (S108,S111,S114,S117,S120,S123,S126,) currently have the same processing as that described above, except they operate on the language and direction specific database, and where necessary set H$ (the potential new Domain) to the corresponding Phrase Book.

### Information

In the Information section the input is used for searching any current topic, or the various other databases in a particular order. If there is a match in a database the result will be in F$ and the matched index entry will be in X$. The result could potentially be a choice tree that would require the Domain to be set. So, if there is a match H$ is set to indicate the potential new Domain value. The decision as to whether to set the Domain or not is in the "End processing" for "Reply" (S160).

At Information (S129) I$ is pre-processed for use in information searches. If there is a current topic (S130) then a decision tree is used to select processing for the current topic. If the current topic is "Mathematics" then I$ is used to search the Mathematics Database in a case ordered fashion (case sensitive, if there is no match then case insensitive). If there is a match (S132) then H$ is set to "Mathematics" as a potential new Domain, see "End processing" for "Reply" (S160). If there is no match (S132) the user is sent a no match message, see "End processing" for "Log End".

The decision tree checks for the other topics: Science, Chemistry, Physics, Biology, History, Geography (S133,S135,S137,S139,S141,S143) where processing is the same method as for the "Mathematics" topic, except that the relevant Database is used and if necessary H$ will be set to the relevant topic.

If there is a current topic (S130) but it is not matched against a topic (S143) then the user is sent a no match found message, see "End processing" for "Log End".

If there is no current topic (S130) then I$ is used for a case sensitive search of various databases (S145): Encyclopedia, Facts, Miscellaneous, Numbers, all the topics. If there is no match the a case insensitive search is done of the same databases in the same order.

If there is a match on any database (S146,S147,S148,S149,S150,S151,S152, S153,S154,S155) then H$ is set to the corresponding database as a potential new Domain, see "End processing" for "Reply" (S160).

If there is no match for any case on any database (S155) the user is sent a not found message, see "End processing" for "Log End".

### End Processing

"Domain Reply" (S156) is reached if there was a successful single character choice entry which requires the Root to be changed. S$ will contain what was searched for. F$ will contain the results. At "Domain Reply" (S156) the Root R$ is set to S$. If the first character of the results F$ is a "^" (S157) this indicates that part of the results should be used as input to the flowchart, so C$ is set to the characters in F$ after the "^", a loop counter is incremented and processing continues from "Connector 1". Otherwise the user is sent F$ as a message, see below for "End".

"Web Reply" (S158) is reached after a successful retrieval from the web. S$ will contain what was searched for. F$ will contain the results in a suitable form for SMS. The Domain will already be set to Web. At "Web Reply" (S158) the Root R$ is set to S$, the user is sent F$ as a message, see below for "End".

"Log End" (S159) is reached after an unsuccessful match or retrieval or an unusual system condition so that the request, current status and condition can be logged for future reference. At "Log End" the current status (Domain, Root, Topic, C$, I$, S$, P$ etc.) are output to a Log, see below for "End".

"Reply" (S160) is reached after a successful match that was not Root and Domain dependent, and therefore may require the Root and Domain to be set. X$ will contain the index entry matched. F$ will contain the results. H$ will contain the potential new Domain. At "Reply" (S160), if the last character of X$ is "\" (S162) the Domain and Root need to be set, R$ is set to X$ and Domain is set to H$. Processing continues as for "Reply 2" (S161).

"Reply 2" (S161) is reached after a successful match where there is no requirement to alter the Root or the Domain. At "Reply 2" (S161), if the first character of the results F$ is a "^" (S163) this indicates that part of the results should be used as input to the flowchart, so C$ is set to the characters in F$ after the "^", a loop counter is incremented and processing continues from "Connector 1". Otherwise the user is sent F$ as a message, see below for "End".

"End" is reached for termination of the flowchart processing. There is post-processing that occurs at an "End" connector, the current values of Topic, Domain and Root are returned to the memory store for this user (CLI).

### Flowchart Step Lookup Table

| **Step No.** | **Description** |
|---|---|
| 1. | Check for "=" terminator indicating calculator request |
| 2. | Test for "@" prefix requesting web access to a new site |
| 3. | Look for "." prefix indicating a Dictionary request |
| 4. | Check for "D?" prefix indicating "German to English Phrase Book" |
| 5. | Check for "?D" prefix indicating "English to German Phrase Book" |
| 6. | Check for "E?" prefix indicating "Spanish to English Phrase Book" |
| 7. | Check for "?E" prefix indicating "English to Spanish Phrase Book" |
| 8. | Check for "F?" prefix indicating "French to English Phrase Book" |
| 9. | Check for "?F" prefix indicating "English to French Phrase Book" |
| 10. | Check for "I?" prefix indicating "Italian to English Phrase Book" |
| 11. | Check for "?I" prefix indicating "English to Italian Phrase Book" |
| 12. | Test for "*l*" prefix for user topic control |
| 13. | Check input length to detect single "/" to clear current topic |
| 14. | Clear current topic after input is "/" |
| 15. | Extract topic name from input |
| 16. | Check if requested topic is Maths |
| 17. | Check if requested topic is Science |
| 18. | Check if requested topic is Chemistry |
| 19. | Check if requested topic is Physics |
| 20. | Check if requested topic is Biology |
| 21. | Check if requested topic is History |
| 22. | Check if requested topic is Geography |
| 23. | Test if requested topic is "list" indicating request for list of topics |
| 24. | Look if there is a topic to decide if need topic help or current topic |
| 25. | Test for "=" as part of "/=" input requesting current topic setting |
| 26. | Check input length to see if this might be a single choice character |
| 27. | Choice input, see if choice relates to a previous Web access results |
| 28. | Determine if Web access was successful to decide on error message or HTML formatting |
| 29. | Choice input, see if choice relates to a previous German to English Phrasebook results |
| 30. | Test for database match so as to reply not found, or with results |
| 31. | Choice input, see if choice relates to a previous English to German Phrasebook results |
| 32. | Test for database match so as to reply not found, or with results |
| 33. | Choice input, see if choice relates to a previous Spanish to English Phrasebook results |
| 34. | Test for database match so as to reply not found, or with results |
| 35. | Choice input, see if choice relates to a previous English to Spanish Phrasebook results |
| 36. | Test for database match so as to reply not found, or with results |
| 37. | Choice input, see if choice relates to a previous French to English Phrasebook results |
| 38. | Test for database match so as to reply not found, or with results |
| 39. | Choice input, see if choice relates to a previous English to French Phrasebook results |
| 40. | Test for database match so as to reply not found, or with results |
| 41. | Choice input, see if choice relates to a previous Italian to English Phrasebook results |
| 42. | Test for database match so as to reply not found, or with results |
| 43. | Choice input, see if choice relates to a previous English to Italian Phrasebook results |
| 44. | Test for database match so as to reply not found, or with results |
| 45. | Choice input, see if choice relates to a previous Dictionary results |
| 46. | Test for database match so as to reply not found, or with results |
| 47. | Choice input, see if choice relates to a previous Encyclopedia results |
| 48. | Test for database match so as to reply not found, or with results |
| 49. | Choice input, see if choice relates to a previous Facts results |
| 50. | Test for database match so as to reply not found, or with results |
| 51. | Choice input, see if choice relates to a previous Miscellaneous results |
| 52. | Test for database match so as to reply not found, or with results |
| 53. | Choice input, see if choice relates to a previous Numbers results |
| 54. | Test for database match so as to reply not found, or with results |
| 55. | Choice input, see if choice relates to a previous Maths topic results |
| 56. | Test for database match so as to reply not found, or with results |
| 57. | Choice input, see if choice relates to a previous Science topic results |
| 58. | Test for database match so as to reply not found, or with results |
| 59. | Choice input, see if choice relates to a previous Chemistry topic results |
| 60. | Test for database match so as to reply not found, or with results |
| 61. | Choice input, see if choice relates to a previous Physics topic results |
| 62. | Test for database match so as to reply not found, or with results |
| 63. | Choice input, see if choice relates to a previous Biology topic results |
| 64. | Test for database match so as to reply not found, or with results |
| 65. | Choice input, see if choice relates to a previous History topic results |
| 66. | Test for database match so as to reply not found, or with results |
| 67. | Choice input, see if choice relates to a previous Geography topic results |
| 68. | Test for database match so as to reply not found, or with results |
| 69. | Choice input, see if choice relates to a previous Anagrams topic results |
| 70. | Test for database match so as to reply not found, or with results |
| 71. | Pre-process input ready for calculator |
| 72. | Test if this is a Derivatives request |
| 73. | Test if this is a Integrals request |
| 74. | Check for a match in the Maths Formula Database |
| 75. | Derivatives processing |
| 76. | Check for syntax error for Derivatives in input |
| 77. | Test for match in Derivatives database |
| 78. | Integrals processing |
| 79. | Check for syntax error for Integrals in input |
| 80. | Test for match in Integrals database |
| 81. | Maths Engine processing |
| 82. | Check for syntax error for Maths Engine in input |
| 83. | Convert the input into a standard form for the Maths Engine |
| 84. | Web Access processing for input with "@" prefix, initial page request not choices |
| 85. | Decide if there is a suffix or whether a ".com" suffix should be added |
| 86. | Check if the Web request for the page for this URL was successful |
| 87. | Set the Domain to Web so that subsequent choice inputs relate to these results |
| 88. | Dictionary processing for input with "." Prefix |
| 89. | Is this a Dictionary help request? Determined by just a "." as input |
| 90. | Is this an Anagram request? Determined by last character being "!" |
| 91. | Check that the input is limited to valid dictionary characters |
| 92. | Is Word Match required because the input contains wildcards? |
| 93. | Choose different processing according to word length, or just long words |
| 94. | Dictionary Help processing, for just a "." Input |
| 95. | Anagrams processing, for Dictionary input ending in "!" |
| 96. | Check if there are known anagrams for the characters input |
| 97. | For many anagrams Root/Domain choice tree, determined by "\" on end of index entry |
| 98. | Word Match processing, determined by Dictionary input with Wildcards, not yet available |
| 99. | Word N processing, determined by Dictionary input for word less than 10 characters |
| 100. | Test if case sensitive search for this word was successful |
| 101. | Test if case insensitive search for this word was successful |
| 102. | Long Words processing, determined by Dictionary input for word of more than 10 letters |
| 103. | Test if case sensitive search for this word was successful |
| 104. | Test if case insensitive search for this word was successful |
| 105. | German to English Phrasebook processing, determined by prefix of "D?" |
| 106. | Test if case sensitive search for this phrase was successful |
| 107. | Test if case insensitive search for this phrase was successful |
| 108. | English to German Phrasebook processing, determined by prefix of "?D" |
| 109. | Test if case sensitive search for this phrase was successful |
| 110. | Test if case insensitive search for this phrase was successful |
| 111. | Spanish to English Phrasebook processing, determined by prefix of "E?" |
| 112. | Test if case sensitive search for this phrase was successful |
| 113. | Test if case insensitive search for this phrase was successful |
| 114. | English to Spanish Phrasebook processing, determined by prefix of "?E" |
| 115. | Test if case sensitive search for this phrase was successful |
| 116. | Test if case insensitive search for this phrase was successful |
| 117. | French to English Phrasebook processing, determined by prefix of "F?" |
| 118. | Test if case sensitive search for this phrase was successful |
| 119. | Test if case insensitive search for this phrase was successful |
| 120. | English to French Phrasebook processing, determined by prefix of "?F" |
| 121. | Test if case sensitive search for this phrase was successful |
| 122. | Test if case insensitive search for this phrase was successful |
| 123. | Italian to English Phrasebook processing, determined by prefix of "I?" |
| 124. | Test if case sensitive search for this phrase was successful |
| 125. | Test if case insensitive search for this phrase was successful |
| 126. | English to Italian Phrasebook processing, determined by prefix of "?I" |
| 127. | Test if case sensitive search for this phrase was successful |
| 128. | Test if case insensitive search for this phrase was successful |
| 129. | Information processing, for input with no prefix or suffix and not a single character choice |
| 130. | Separate processing if there is a current topic |
| 131. | Information processing for current topic being Maths |
| 132. | Test for successful search of database, reply not found, or set potential Domain |
| 133. | Information processing for current topic being Science |
| 134. | Test for successful search of database, reply not found, or set potential Domain |
| 135. | Information processing for current topic being Chemistry |
| 136. | Test for successful search of database, reply not found, or set potential Domain |
| 137. | Information processing for current topic being Physics |
| 138. | Test for successful search of database, reply not found, or set potential Domain |
| 139. | Information processing for current topic being Biology |
| 140. | Test for successful search of database, reply not found, or set potential Domain |
| 141. | Information processing for current topic being History |
| 142. | Test for successful search of database, reply not found, or set potential Domain |
| 143. | Information processing for current topic being Geography, else no topic |
| 144. | Test for successful search of database, reply not found, or set potential Domain |
| 145. | Information searches across databases |
| 146. | Encyclopedia case sensitive match? If found set potential new Domain |
| 147. | Facts case sensitive match? If found set potential new Domain |
| 148. | Miscellaneous case sensitive match? If found set potential new Domain |
| 149. | Numbers case sensitive match? If found set potential new Domain |
| 150. | All topics case sensitive match? If found set potential new Domain |
| 151. | Encyclopedia case insensitive match? If found set potential new Domain |
| 152. | Facts case insensitive match? If found set potential new Domain |
| 153. | Miscellaneous case insensitive match? If found set potential new Domain |
| 154. | Numbers case insensitive match? If found set potential new Domain |
| 155. | All topics case insensitive match? Reply not found, or set potential new Domain |
| 156. | Domain Reply processing after successful choice entry (doesn't set Domain) |
| 157. | Test for "^" indicating resubmit rest of results as input |
| 158. | Web Reply processing after successful choice entry (doesn't set Domain) |
| 159. | Log end processing, to log all unsuccessful searches and unusual conditions |
| 160. | Reply processing, successful non-choice search that may need Root/Domain set |
| 161. | Reply 2 processing, successful non-choice search that doesn't need Root/Domain set |
| 162. | If database index entry ends in "\", set Root and Domain for subsequent choice entry |
| 163. | Test for "^" indicating resubmit rest of results as input |

## Claims

1. A telecommunications services apparatus for use with a mobile radio telecommunications system, said services apparatus comprising a communications processor (10) operable to receive data from mobile stations (1) and to send data to said mobile stations (1) via said mobile radio system, a data store (22,28) arranged to store information, and an information processor (12) coupled to said communications processor (10) and said data store (22,28), said information processor (12) being operable in response to information query data received from a one of said mobile stations (1) to retrieve information from said data store (22,28) in accordance with said received query data, for communication to said mobile station (1), **characterised in that** said data store (22,28) is arranged to store said information in accordance with a hierarchical structure, and **in that** said information processor (12) is adapted to maintain a query store (16) associated with an identification for said mobile station (1), said information processor (12) being arranged to store in said query store (16) an indication of a relative position in said hierarchical structure appertaining to the information retrieved in response to a previous information query from said mobile station (1).

2. A telecommunication services apparatus as claimed in Claim 1, wherein said information processor (12) is operable to receive said query data via the Short Message Service, and to format said information retrieved from said data store (22,28) to the effect that said information can be communicated via the Short Message Service, said mobile radio telecommunications system being arranged to operate in accordance with the Global System for Mobiles.

3. A telecommunications services apparatus as claimed in Claims 1 or 2, wherein said data store is coupled to an Internet Server (28), said information processor (12) being operable to provide access to said data store (40) via the World Wide Web (30).

4. A telecommunications services apparatus as claimed in any preceding Claim, wherein the identification associating each of said mobile stations (1) with a corresponding query store (16) is the subscriber identity of each mobile station (1).

5. A telecommunications services apparatus as claimed in any preceding Claim, wherein said information processor (12) is operable to log query data received from said mobile stations (1).

6. A telecommunications services apparatus as claimed in Claim 5, wherein said information processor (12) is operable to generate a report indicating query data for which no information was available from said data store (22,28).

7. A telecommunications services apparatus as claimed in any preceding Claim, wherein said communications processor (10) is operable to respond to information query data received from a one of the mobile stations irrespective of whether said one of the mobile stations is pre-registered for use with the telecommunications service apparatus.

8. A method of providing information to mobile telecommunications stations (1) communicating via a mobile radio telecommunications system, said method comprising
- arranging a data store (22,28) to store information,
- responding to information query data received from a one of said mobile stations (1), by retrieving information from said data store (22,28) in accordance with said received query data, and
- formatting said retrieved information for communication to said mobile station,
**characterised by**:
- said data store (22,28) storing said information in accordance with a hierarchical structure, and
- maintaining in a query store (16) associated with an identification for said mobile station (1), an indication of a relative position in said hierarchical structure appertaining to the information retrieved in response to a previous information query from said mobile station (1).

## Patentansprüche

1. Telekommunikationsdienstevorrichtung für die Verwendung mit einem mobilen Funktelekommunikationssystem, wobei die Dienstevorrichtung einen Kommunikationsprozessor (10), der betreibbar ist, um Daten von mobilen Stationen (1) zu empfangen und Daten zu diesen mobilen Stationen (1) über das mobile Funksystem zu senden, einen Datenspeicher (22, 28), der angeordnet ist, um Informationen zu speichern, und einen Informationsprozessor (12), der mit dem Kommunikationsprozessor (10) und dem Datenspeicher (22, 28) verbunden ist, aufweist, wobei der Informationsprozessor (12) betreibbar ist, so daß er in Antwort auf Informationsanfragedaten, die von einer der mobilen Stationen (1) empfangen wurden, Informationen von dem Datenspeicher (22, 28) in Übereinstimmung mit den empfangenen Abfragedaten abruft für die Übertragung zu der mobilen Station (1), **dadurch gekennzeichnet, daß** der Datenspeicher (22, 28) angeordnet ist, um die Information in Übereinstimmung mit einer hierarchischen Struktur zu speichern, und dadurch, daß der Informationsprozessor (12) angepaßt ist, um einen Anfragespeicher (16) zu pflegen, der mit einer Identifikation für diese mobile Station (1) verknüpft ist, wobei der Informationsprozessor (12) angeordnet ist, um in dem Anfragespeicher (16) eine Anzeige einer relativen Position in der hierarchischen Struktur zu speichern, die zu der Information gehört, die in Antwort auf eine vorherige Informationsabfrage von der mobilen Station (1) abgerufen wurde.

2. Telekommunikationsdienstevorrichtung nach Anspruch 1, bei der der Informationsprozessor (12) betreibbar ist, so daß er die Abfragedaten über einen Kurznachrichtendienst empfängt und die von dem Datenspeicher (22, 28) abgerufene Information formatiert mit dem Effekt, daß die Information über den Kurznachrichtendienst übertragen werden kann, wobei das mobile Funktelekommunikationssystem angeordnet ist, um in Übereinstimmung mit GSM (Global System for Mobile Communications) zu arbeiten.

3. Telekommunikationsdienstevorrichtung nach Anspruch 1 oder 2, bei der der Datenspeicher mit einem Internetserver (28) verbunden ist und der Informationsprozessor (12) betreibbar ist, um Zugriff auf den Datenspeicher (40) über das World Wide Web (30) bereitzustellen.

4. Telekommunikationsdienstevorrichtung nach einem vorherigen Anspruch, bei der die Identifikation, die jede der mobilen Stationen (1) mit einem entsprechenden Abfragespeicher (16) verknüpft, die Teilnehmeridentität von jeder mobilen Station (1) ist.

5. Telekommunikationsdienstevorrichtung nach einem vorherigen Anspruch, bei der der Informationsprozessor (12) betreibbar ist, um Abfragedaten, die von den mobilen Stationen (1) empfangen wurden, zu protokollieren.

6. Telekommunikationsdienstevorrichtung nach Anspruch 5, bei der der Informationsprozessor (12) betreibbar ist, um einen Bericht zu erzeugen, der Abfragedaten anzeigt, für die keine Information von dem Datenspeicher (22, 28) verfügbar war.

7. Telekommunikationsdienstevorrichtung nach einem der vorherigen Ansprüche, bei der der Kommunikationsprozessor (10) betreibbar ist, um auf Informationsabfragedaten zu antworten, die von einer der mobilen Stationen empfangen wurden, unabhängig davon, ob die eine der mobilen Stationen für die Verwendung mit der Telekommunikationsdiensteeinrichtung vorregistriert ist.

8. Verfahren zum Bereitstellen von Informationen für mobile Telekommunikationsstationen (1), die über ein mobiles Funktelekommunikationssystem miteinander kommunizieren, wobei das Verfahren aufweist
- Anordnen eines Datenspeichers (22, 28), um Information zu speichern,
- Antworten auf Informationsabfragedaten, die von einer der mobilen Stationen (1) empfangen wurden, durch Abrufen von Information von dem Datenspeicher (22, 28) in Übereinstimmung mit den empfangenen Abfragedaten, und
- Formatieren der abgefragten Information zur Übermittlung zur mobilen Station,
**dadurch gekennzeichnet, daß**:
- der Datenspeicher (22, 28) die Information in Übereinstimmung mit einer hierarchischen Struktur speichert und
- in einem Abfragespeicher (16), der mit einer Identifikation für die mobile Station (1) verknüpft ist, eine Anzeige einer relativen Position in der hierarchischen Struktur gepflegt wird, die zur Information gehört, die in Antwort auf eine vorherige Informationsabfrage von dieser mobilen Station (1) abgerufen wurde.

## Revendications

1. Appareil pour services de télécommunications destiné à être utilisé avec un système de télécommunications radio mobile, ledit appareil de services comportant un processeur (10) de communications pouvant être mis en oeuvre pour recevoir des données depuis des stations mobiles (1) et pour envoyer les données auxdites stations mobiles (1) en passant par ledit système radio mobile, une mémoire (22, 28) de données agencée pour stocker des informations, et un processeur (12) d'informations couplé audit processeur (10) de communications et à ladite mémoire (22, 28) de données, ledit processeur (12) d'informations pouvant être mis en oeuvre en réponse à des données de demande d'informations reçues depuis l'une desdites stations mobiles (1), pour récupérer des informations depuis ladite mémoire (22, 28) de données conformément auxdites données de demande reçues, pour les communiquer à ladite station mobile (1), **caractérisé en ce que** ladite mémoire (22, 28) de données est agencée de façon à stocker lesdites informations conformément à une structure hiérarchique, et **en ce que** ledit processeur (12) d'information est conçu pour maintenir une mémoire de demande (16) associée à une identification pour ladite station mobile (1), ledit processeur (12) d'information étant agencé pour stocker dans ladite mémoire (16) de demande une indication d'une position relative dans ladite structure hiérarchique appartenant aux informations récupérées en réponse à une demande d'informations précédente provenant de ladite station mobile (1).

2. Appareil de services de télécommunications selon la revendication 1, dans lequel ledit processeur (12) d'information peut être mise en oeuvre pour recevoir lesdites données de demande en passant par le service de messages courts (SMS), et pour formater lesdites informations récupérées depuis ladite mémoire (22, 28) de données afin que lesdites informations puissent être communiquées par l'intermédiaire du service de message court, ledit système de télécommunications radio mobile étant agencé pour fonctionner conformément au système global pour mobile, GSM.

3. Appareil de services de télécommunications selon la revendication 1 ou 2, dans lequel ladite mémoire de données est couplée à un serveur Internet (28), ledit processeur (12) d'informations pouvant être mis en oeuvre pour donner accès à ladite mémoire (40) de données en passant par la toile www (30).

4. Appareil de services de télécommunications selon l'une quelconque des revendications précédentes, dans lequel l'identification associant chacune desdites stations mobiles (1) à une mémoire de demande correspondante (16) est l'identité d'abonné de chaque station mobile (1).

5. Appareil de services de télécommunications selon l'une quelconque des revendications précédentes, dans lequel ledit processeur (12) d'informations peut être mis en oeuvre pour enregistrer des données de demande reçues depuis lesdites stations mobiles (1).

6. Appareil de services de télécommunications selon la revendication 5, dans lequel ledit processeur (12) d'information peut être mis en oeuvre pour générer un rapport indiquant des données de demande pour lesquelles aucune information n'était disponible depuis ladite mémoire (22, 28) de données.

7. Appareil de services de télécommunications selon l'une quelconque des revendications précédentes, dans lequel ledit processeur (10) de communications peut être mis en oeuvre pour répondre à des données de demande d'informations reçues de l'une des stations mobiles indépendamment du fait que ladite une des stations mobiles est préenregistrée pour une utilisation avec l'appareil de services de télécommunications.

8. Procédé pour fournir de l'information à des stations de télécommunications mobiles (1) communiquant par l'intermédiaire d'un système de télécommunications radio mobile, ledit procédé comprenant :
- l'agencement d'une mémoire (22, 28) de données pour stocker des informations,
- la réponse à des données de demande d'informations reçues de l'une desdites stations mobiles (1) en récupérant des informations depuis ladite mémoire (22, 28) de données conformément auxdites données de demande reçues, et
- le formatage desdites informations récupérées pour une communication à ladite station mobile,
**caractérisé en ce que** :
- ladite mémoire de données (22, 28) stocke lesdites informations conformément à une structure hiérarchique, et
- une indication d'une position relative dans ladite structure hiérarchique appartenant à l'information reçue en réponse à une demande d'information précédente provenant de ladite station mobile (1) est conservée dans une mémoire (16) de demande associée à une identification pour ladite station mobile (1).
